# EUROPÄISCHE PATENTANMELDUNG

(11) **EP 2 487 283 A1**
(43) Veröffentlichungstag der Anmeldung: **15.08.2012**
(21) Anmeldenummer: 11405209.5
(22) Anmeldetag: 10.02.2011
(51) Int. Cl.: D03D 15/00, D04B 1/00, B60N 2/58, A47C 31/11

(54) **Textilsubstrat mit wasser- und wasserdampfableitenden Eigenschaften**

(71) Anmelder: Gessner Holding AG, 8820 Wädenswil (CH)
(72) Erfinder: Baumeler, Alfred, 8852 Altendorf (CH)
(74) Vertreter: EGLI-EUROPEAN PATENT ATTORNEYS

(57) **Zusammenfassung**

Das Textilsubstrat (1) umfasst Kette und Schuss, wobei die Kette mehrere Kettfäden (K26-K34) und der Schuss mehrere Schussfäden (S29, S30) umfasst, wobei jeder Kettfaden mehrere Schussfäden und jeder Schussfaden mehrere Kettfäden überkreuzt, sodass die Kette und der Schuss gemeinsam eine Schicht bilden, welche eine erste Oberfläche (2-1) und eine der ersten Oberfläche gegenüberliegende zweite Oberfläche (2-2) aufweist. Dabei besteht mindestens einer der Kettfäden (K26-K34) oder mindestens einer der Schussfäden (S29) aus einem ersten Garn (15) und mindestens einer der Kettfäden oder mindestens einer der Schussfäden (S30) aus einem zweiten Garn (16). Das erste Garn (15) ist ein Dreikomponentengarn, welches Fasern aus Wolle und Celluloseregenerat und mindestens eine dritte Faser in Form einer Endlosfaser aus einem synthetischen Werkstoff umfasst. Das zweite Garn (16) enthält Celluloseregenerat-Fasern, wobei der Massenanteil der jeweils im zweiten Garn enthaltenen Celluloseregenerat-Fasern an der Gesamtmasse des zweiten Garns grösser ist als der Massenanteil der jeweils im ersten Garn enthaltenen zweiten Fasern aus Celluloseregenerat an der Gesamtmasse des ersten Garns. Im Falle des mindestens einen aus dem ersten Garn (15) bestehenden Kettfadens oder Schussfadens (S29) ist die Gesamtlänge aller derjenigen Längsabschnitte, welche an der ersten Oberfläche (2-1) verlaufen, grösser als die Gesamtlänge aller Längsabschnitte, welche an der zweiten Oberfläche (2-2) verlaufen. Im Falle des mindestens einen aus dem zweiten Garn (16) bestehenden Kettfadens oder Schussfadens (S30) ist die Gesamtlänge aller derjenigen Längsabschnitte, welche an der ersten Oberfläche (2-1) verlaufen, kleiner als die Gesamtlänge aller Längsabschnitte ist, welche an der zweiten Oberfläche (2-2) verlaufen.

## Beschreibung

Die Erfindung bezieht sich auf ein Textilsubstrat aus Kette und Schuss, welches wasserableitend und wasserdampfableitend ist und Wolle und zumindest Celluloseregenerat-Fasern umfasst.

Derartige Textilsubstrate zeichnen sich durch eine hervorragende Fähigkeit zur Aufnahme und Ableitung von Wasser und Wasserdampf aus. Sie haben beispielsweise die Eigenschaft, dass Feuchtigkeit (z.B. Wasser, Wasserdampf), welche auf eine äussere Oberfläche des jeweiligen Textilsubstrats gelangt, von der Oberfläche abgeleitet und in das Innere des Textilsubstrats transportiert wird. Aufgrund dieser Eigenschaft sind derartige Textilsubstrate beispielsweise als Sitzbezug einer Sitzeinrichtung geeignet, zumal ein aus einem derartigen Textilsubstrat gebildeter Sitzbezug eine Feuchtigkeit, welche eine Person erzeugt und beim Sitzen auf den Sitzbezug abgibt, absorbieren und transportieren kann, sodass die jeweilige Person den Sitzbezug auch nach längerem Sitzen nicht als zu feucht, sondern in der Regel als trocken empfindet. Derartige Sitzbezüge gewährleisten demnach ein "klimatisiertes" Sitzen, welches mit einem guten Sitzkomfort verbunden ist.

Diese Textilsubstrate haben in der Regel eine hohe Atmungsaktivität, einen vergleichweise geringen Wärmedurchgangswiderstand und eine gute Transport- und Aufnahmefähigkeit für Feuchtigkeit und können deshalb in der Regel "passiv" (ohne Beeinflussung der Feuchtigkeit mit regelungstechnischen Mitteln) ein klimatisiertes Sitzen gewährleisten: In Kombination miteinander führen die vorstehend genannten Eigenschaften dieser Textilsubstrate dazu, dass aus derartigen Textilsubstraten gebildete Sitzflächen relativ trocken und angenehm kühl bleiben. Solche Textilsubstrate eignen sich deshalb insbesondere als Sitzbezüge für Sitzeinrichtungen, welche in der Regel während langen Sitzphasen ohne Unterbrechung benutzt werden, z.B. für Sitzeinrichtungen in Autos und Bussen, in der Bahn und im Flugzeug sowie für Bürostühle, Rollstühle etc.

Aus EP1 127 969 B1 ist beispielsweise ein für die Aufnahme und Ableitung von Wasser geeignetes Textilsubstrat bekannt, welches aus einem ersten Fadensystem in Form von Kettfäden (im Folgenden "Kette") und einem zweiten Fadensystem in Form von Schussfäden (im Folgenden "Schuss") zusammengesetzt ist und Fasern aus Wolle und Fasern aus einem CelluloseRegenerat in Form von Viskose (CV) enthält. Eines der genannten Fadensysteme (d.h. die Kette oder der Schuss) umfasst dabei ein Mischgarn aus 30-70 Gewichtsprozent (im Folgenden "Gew.-%") Wolle und 30-70 Gew.-% Viskose und das jeweils andere der Fadensysteme (d.h. der Schuss oder die Kette) umfasst abwechselnd ein Mischgarn aus 30-70 Gew.-% Wolle und 30-70 Gew.-% Viskose und ein Garn aus 100 Gew.-% Viskose. Bei diesem Textilsubstrat sind insbesondere die Fasern aus Viskose in der Lage, relativ grosse Mengen Wasser aufzunehmen und über relativ weite Distanzen in den jeweiligen Fasern abzuleiten, sodass das Textilsubstrat hinsichtlich Wasser eine Saugfähigkeit aufweist, welche angemessen ist, um das Substrat für Sitzbezüge zu verwenden.

Weiterhin sind Textilsubstrate bekannt, die Feuchtigkeit mittels Kapillarsystemen transportieren. Sie bestehen vorzugsweise aus Fasern aus polymeren Werkstoffen. Derartige Fasern nehmen in der Regel nur äusserst wenig oder keine Feuchtigkeit in sich auf, sodass Textilsubstrate aus derartigen Fasern die Feuchtigkeit jeweils in Zwischenräumen zwischen den jeweiligen Fasern aufnehmen und transportieren, wobei die Feuchtigkeit jeweils an Oberflächen einzelner Fasern angrenzende Grenzschichten bildet und in diesen Grenzschichten entlang der jeweiligen Oberflächen der Fasern transportierbar ist. Derartige Textilsubstrate sind für Feuchtigkeit in der Regel aufgrund ihrer Struktur sorbierend, d.h. die jeweilige geometrische Anordnung der Oberflächen der einzelnen Fasern bestimmt die Fähigkeit des jeweiligen Textilsubstrats, Feuchtigkeit aufzunehmen und zu transportieren. Zwischen verschiedenen Fasern ist Feuchtigkeit in der Regel nur dann relativ effizient transportierbar, wenn die Fasern relativ dünn sind und mit einer relativ hohen Dichte in Bündeln angeordnet sind, sodass Kapillareffekte wirksam werden können. Daraus resultiert der Nachteil, dass hinsichtlich der geometrischen Anordnung der jeweiligen Fasern in dem jeweiligen Textilsubstrat nur wenig Spielraum besteht, die Anordnung der Fasern zu variieren, zumal ansonsten die Anforderungen für klimatisiertes Sitzen nicht erfüllt werden können. Weiterhin ist auch der Transport der Feuchtigkeit eingeschränkt: Aufgrund der Kapillareffekte erfolgt die Verteilung der Feuchtigkeit vorzugsweise entlang der jeweiligen Faserbündel, sodass sich die Feuchtigkeit im Wesentlichen entlang einer Fläche verteilt, welche durch die Anordnung der jeweiligen Fasern bestimmt ist. Für spezifische Anforderungen, beispielsweise bei Sportbekleidung, ist dies gewünscht, zumal an den Grenzflächen eine hohe Kühlleistung und gleichzeitig eine schnelle Abtrocknung erzielt werden kann, bedingt durch Verdampfen von Wasser an den Grenzflächen und den Entzug der für diesen Prozess benötigten Wärmemenge aus dem Textilsubstrat. Die vorstehend genannten Effekte stehen allerdings geradezu im Widerspruch zu wesentlichen Voraussetzungen, die für passiv klimatisiertes Sitzes erfüllt sein müssen, und sind in der Regel nur zu erzielen unter Bedingungen, welche mit "klimatisiertem" Sitzen nicht vereinbar sind. Einerseits erzielt ein Textilsubstrat der vorstehend genannten Art die vorstehend genannte Kühlwirkung nämlich erst, wenn die darauf sitzende Person bereits intensiv schwitzt. Wenn eine schwitzende Person über eine längere Zeit mit einer Oberfläche eines derartigen Textilsubstrats in Kontakt war und sich anschliessend von dieser Oberfläche entfernt, dann verdunstet die an dieser Oberfläche gesammelte Feuchtigkeit und kühlt diese Oberfläche in relativ kurzer Zeit relativ stark ab. Einen erneuten Kontakt mit der Oberfläche des Textilsubstrats würde die Person unter den vorstehend genannten Bedingungen als "kalt-nass" empfinden. Letzteres spricht dagegen, ein derartiges Textilsubstrat als Sitzbezug einer Sitzeinrichtung für lange Sitzphasen zu verwenden, zumal Personen auf solchen Sitzeinrichtungen während eines längeren Zeitraums mit kurzzeitigen Unterbrechungen sitzen, sodass eine Person einen erneuten Kontakt mit dem jeweiligen Sitzbezug nach jeder dieser Unterbrechungen als "kalt-nass" und somit als unangenehm empfinden würde.

Weiterhin sind Textilsubstrate bekannt, welche innige Mischungen von Wolle mit 5%-15% Fasern aus Polymeren enthalten. Nachteilig sind dabei die relativ langsame Trocknung der rechten Warenseite und ein geringer Wärmetransport, vorteilhaft ist die gute Scheuerresistenz. Weiterhin sind Fasern aus Wolle und Polymeren enthaltene Textilsubstrate bekannt, deren Verhalten bezüglich Feuchtigkeit durch die bereits erwähnten kapillaren Effekte von Fasern aus Polymeren und die Eigenschaft von Wolle, Wasserdampf aufzunehmen, bestimmt ist. In diesem Fall hat ein hoher Anteil an Stapelfasern aus Polymeren den Effekt, dass die Fähigkeit des Substrats abzutrocknen verbessert wird, nachteilig ist allerdings eine limitierte Aufnahme und Speicherung von Feuchtigkeit und eine geringe Wärmeleitfähigkeit des Textilsubstrats.

Bekannt sind auch Textilsubstrate, welche als eine Mehrschichtstruktur - gebildet aus mehreren übereinander angeordneten, gegebenenfalls aus verschiedenen Materialien zusammengesetzten und miteinander verbundenen Schichten - ausgebildet sind. Derartige Textilsubstrate sind wegen ihrer komplexen Struktur meistens relativ teuer. Weiter haben derartige Textilsubstrate wegen ihrer Mehrschichtstruktur in der Regel eine für eine Verwendung als Sitzbezug ungenügende Flächenstabilität.

Hinsichtlich Sitzeinrichtungen besteht der stete Wunsch, einerseits das Gewicht der Sitzeinrichtungen möglichst zu reduzieren und ausserdem den Sitzkomfort mit Massnahmen, welche das Sitzklima positiv beeinflussen und regulieren, zu verbessern. Daraus resultiert der Wunsch, Sitzeinrichtungen aus möglichst wenigen und leichten Komponenten aufzubauen, welche die gewünschten Eigenschaften der Sitzeinrichtung gewährleisten können. Dabei nimmt die Sitzfläche als Schnittstelle zwischen Mensch und Sitz eine besondere Stellung für das Wohlbefinden beim Sitzen ein. Sitzeinrichtungen umfassen in der Regel eine verformbare, den jeweiligen Sitzbezug tragende Unterkonstruktion. Derartige Unterkonstruktionen werden vorwiegend aus geschäumten Materialien in geringer Stärke hergestellt um Gewicht zu reduzieren. Je dünner derartige Unterkonstruktionen sind, umso weniger Feuchtigkeit können diese aufnehmen. Dasselbe gilt für die Textilsubstrate, welche als Sitzbezug verwendet werden.

Derartige Konstruktionen führen oft dazu, dass die sitzende Person im Bereich der Kontaktfläche mit dem Sitzbezug schwitzt. Vielfach werden diese negativen Auswirkungen durch energieintensive und aufwändige Lösungen zur Kühlung der Umgebung der Sitzeinrichtung bei gleichzeitiger Lufttrocknung kompensiert, wobei sich erfahrungsgemäss dadurch für eine auf der Sitzeinrichtung sitzende Person kein ausreichender Sitzkomfort (im Sinne von langanhaltendem Wohlbefinden) einstellt, weil eine sitzende Person in der Regel empfindlich auf Unterschiede zwischen den Eigenschaften des jeweiligen Sitzes (im vorliegenden Fall nimmt die Person tendenziell feuchte Sitzflächen und hohe Sitzflächentemperaturen wahr) und Eigenschaften der Umgebung (in diesem Fall nimmt die Person eine künstlich gesenkte Umgebungstemperatur und eine verringerte Luftfeuchte wahr) reagiert und diese Unterschiede umso irritierender empfindet, je grösser diese Unterschiede sind.

Der vorliegenden Erfindung liegt die Aufgabe zugrunde, die genannten Nachteile zu vermeiden und ein Textilsubstrat zu schaffen, welches verhältnismässig einfach aufgebaut und kostengünstig herstellbar ist und hinsichtlich einer Ableitung von Feuchtigkeit (Wasser und/oder Wasserdampf) Eigenschaften aufweist, welche es ermöglichen, das Textilsubstrat als Sitzbezug zu verwenden, welcher ein passiv klimatisiertes Sitzen mit einem verbesserten Sitzkomfort während langen Sitzphasen ermöglicht.

Diese Aufgabe wird gelöst durch ein Textilsubstrat mit den Merkmalen des Patentanspruchs 1.

Dieses Textilsubstrat besteht aus Kette und Schuss und umfasst Wolle und zumindest Celluloseregenerat-Fasern, wobei die Kette eine Mehrzahl von Kettfäden und der Schuss eine Mehrzahl von Schussfäden umfasst und wobei jeder Kettfaden mehrere Schussfäden jeweils an mindestens einem Kreuzungspunkt überkreuzt und jeder Schussfaden mehrere Kettfäden jeweils an mindestens einem Kreuzungspunkt überkreuzt, sodass die Kette und der Schuss gemeinsam eine Schicht bilden, welche auf einer Seite eine erste Oberfläche und auf einer anderen Seite eine der ersten Oberfläche gegenüberliegende zweite Oberfläche aufweist. Dabei ist vorausgesetzt, dass mindestens einer der Kettfäden oder mindestens einer der Schussfäden aus einem ersten Garn besteht und mindestens einer der Kettfäden oder mindestens einer der Schussfäden aus einem zweiten Garn besteht.

Gemäss der Erfindung ist das erste Garn ein Dreikomponentengarn, welches mindestens eine erste Faser aus Wolle, mindestens eine zweite Faser aus Celluloseregenerat und mindestens eine dritte Faser in Form einer Endlosfaser aus einem synthetischen Werkstoff umfasst. Weiterhin enthält das zweite Garn eine vorgegebene Menge Celluloseregenerat-Fasern, wobeider prozentuale Anteil der Masse ("Massenanteil") der jeweils im zweiten Garn enthaltenen Celluloseregenerat-Fasern an der jeweiligen Gesamtmasse des zweiten Garns grösser ist als der prozentuale Anteil der Masse ("Massenanteil") der jeweils im ersten Garn enthaltenen zweiten Fasern aus Celluloseregenerat an der jeweiligen Gesamtmasse des ersten Garns.

Weiterhin umfasst die Schicht zumindest einen Bereich, in welchem der mindestens eine aus dem ersten Garn bestehende Kettfaden oder Schussfaden und der mindestens eine aus dem zweiten Garn bestehende Kettfaden oder Schussfaden derart verlaufen, dass
(i) der mindestens eine aus dem ersten Garn bestehende Kettfaden oder Schussfaden einen oder mehrere Längsabschnitte, welche sich jeweils zwischen zwei benachbarten Kreuzungspunkten erstrecken und an der ersten Oberfläche der Schicht verlaufen, und einen oder mehrere Längsabschnitte, welche sich jeweils zwischen zwei benachbarten Kreuzungspunkten erstrecken und zumindest über einen Teil ihrer Länge an der zweiten Oberfläche der Schicht verlaufen, aufweist und
(ii) der mindestens eine aus dem zweiten Garn bestehende Kettfaden oder Schussfaden einen oder mehrere Längsabschnitte, welche sich jeweils zwischen zwei benachbarten Kreuzungspunkten erstrecken und zumindest über einen Teil ihrer Länge an der ersten Oberfläche der Schicht verlaufen, und einen oder mehrere Längsabschnitte, welche sich jeweils zwischen zwei benachbarten Kreuzungspunkten erstrecken und an der zweiten Oberfläche der Schicht verlaufen, aufweist, und
(iii) im Falle des mindestens einen aus dem ersten Garn bestehenden Kettfadens oder Schussfadens die Gesamtlänge aller derjenigen Längsabschnitte, welche in dem zumindest einen Bereich der Schicht an der ersten Oberfläche der Schicht verlaufen, grösser als die Gesamtlänge aller derjenigen Längsabschnitte ist, welche in dem zumindest einen Bereich der Schicht an der zweiten Oberfläche der Schicht verlaufen, und
(iv) im Falle des mindestens einen aus dem zweiten Garn bestehenden Kettfadens oder Schussfadens die Gesamtlänge aller derjenigen Längsabschnitte, welche in dem zumindest einen Bereich der Schicht an der ersten Oberfläche der Schicht verlaufen, kleiner als die Gesamtlänge aller derjenigen Längsabschnitte ist, welche in dem zumindest einen Bereich der Schicht an der zweiten Oberfläche der Schicht verlaufen.

Bei diesem Textilsubstrat können ein oder mehrere Kettfäden aus dem ersten Garn bestehen, es können aber auch ein oder mehrere Schussfäden aus dem ersten Garn bestehen. Alternativ können auch sowohl ein oder mehrere Kettfäden als auch ein oder mehrere Schussfäden aus dem ersten Garn bestehen. Entsprechend können ein oder mehrere Kettfäden aus dem zweiten Garn bestehen, es können aber auch ein oder mehrere Schussfäden aus dem zweiten Garn bestehen. Alternativ können auch sowohl ein oder mehrere Kettfäden als auch ein oder mehrere Schussfäden aus dem zweiten Garn bestehen.

Dadurch, dass jeder Kettfaden mehrere Schussfäden jeweils an mindestens einem Kreuzungspunkt überkreuzt und jeder Schussfaden mehrere Kettfäden jeweils an einem Kreuzungspunkt überkreuzt, sodass die Kette und der Schuss gemeinsam eine Schicht bilden, wird erreicht, dass das erfindungsgemässe Textilsubstrat keine Mehrschichtstruktur bildet, d.h. keine Struktur, bei welcher bestimmte Teilmengen der Kettfäden zusammen mit bestimmten Teilmengen der Schussfäden in verschiedenen übereinander aufgebauten Lagen innerhalb des Textilsubstrats angeordnet sind. Dadurch, dass die Kettfäden und Schussfäden gemeinsam in nur einer Schicht angeordnet sind, hat das Textilsubstrat den Vorteil, dass es mit relativ einfachen Mitteln und mit relativ wenig Aufwand und somit kostengünstig herstellbar ist.

Das Textilsubstrat ist wasserableitend und wasserdampfableitend, wobei für die Ableitung von Wasser und Wasserdampf einerseits die Werkstoffe der im ersten Garn und im zweiten Garn enthaltenen Fasern und andererseits die räumliche Anordnung der verschiedenen Fasern bzw. die räumliche Anordnung des ersten Garns und des zweiten Garns im Textilsubstrat eine wesentliche Rolle spielen.

Falls das Textilsubstrat als Sitzbezug verwendet wird und eine auf dem Textilsubstrat sitzende Person beim Sitzen Feuchtigkeit (z.B. Wasser und/oder Wasserdampf) und in der Regel auch Wärme an das Textilsubstrat abgibt, dann bestimmen die Ableitung der an das Textilsubstrat abgegebenen Feuchtigkeit im Substrat und die jeweilige Temperatur des Substrats wesentlich den Sitzkomfort. Die Erfindung geht daher von der Überlegung aus, dass zur Optimierung des Sitzkomforts die räumliche Anordnung der verschiedenen im ersten Garn und im zweiten Garn enthaltenen Fasern so gewählt wird, dass die sitzende Person die Reaktion des Textilsubstrats auf die an das Textilsubstrat abgegebene Feuchtigkeit und Wärme als möglichst angenehm empfindet.

Die Reaktion des erfindungsgemässen Textilsubstrats auf Feuchtigkeit ist wesentlich dadurch bestimmt, dass das erste Garn und das zweite Garn einerseits unterschiedliche Fasern (d.h. Fasern aus Wolle und Celluloseregenerat und eine Faser in Form einer Endlosfaser aus einem synthetischen Werkstoff im Falle des ersten Garns, zumindest Fasern aus Celluloseregenerat im Falle des zweiten Garns) umfassen, und dass das erste Garn und das zweite Garn jeweils unterschiedlich bezüglich der ersten Oberfläche bzw. der zweiten Oberfläche angeordnet sind. Dies hat einerseits zur Folge, dass das erste Garn und das zweite Garn bezüglich Feuchtigkeit ein unterschiedliches Verhalten zeigen. Weiterhin hat dies zur Folge, dass das Textilsubstrat bei einer Einwirkung von Feuchtigkeit eine Asymmetrie zeigt: Die erste Oberfläche und die zweite Oberfläche des Textilsubstrats zeigen wegen der unterschiedlichen Anordnung des ersten Garns und des zweiten Garns bei einer Einwirkung von Feuchtigkeit ebenfalls ein unterschiedliches Verhalten.

Sowohl die jeweiligen Fasern aus Wolle als auch die jeweiligen Fasern aus Celluloseregenerat sind Textilfasern, welche grosse Mengen Feuchtigkeit absorbieren können und in einer Umgebung, in der sich das Raumklima und somit auch die Feuchtigkeit ändern können, jeweils so viel Feuchtigkeit aufnehmen, dass sich die Fasern ständig in einem Feuchtigkeitsgleichgewicht mit der Umgebung befinden (zumindest in einem gewissen Spektrum unterschiedlicher Raumklima-Verhältnisse). Um ständig einen Feuchtigkeitsausgleich zwischen den jeweiligen Fasern und der Umgebung zu ermöglichen, finden jeweils gleichzeitig eine Absorption und eine Desorption von Feuchtigkeit, basierend auf molekularer Permeation, statt.

Allerdings ist in diesem Zusammenhang zu berücksichtigen, dass Fasern aus Wolle und Fasern aus Celluloseregenerat sich hinsichtlich ihrer Fähigkeit unterscheiden, Wasser oder Wasserdampf aufzunehmen oder in der jeweiligen Faser zu transportieren. Fasern aus Celluloseregenerat können beispielsweise Wasser (im flüssigen Zustand) wesentlich schneller aufnehmen und auch wesentlich schneller abgeben als Fasern aus Wolle. Fasern aus Wolle benötigen dementsprechend eine wesentlich längere Zeit zum Trocknen als Fasern aus Celluloseregenerat. Auf der anderen Seite können Fasern aus Wolle (im Gegensatz zu Fasern aus Celluloseregenerat) relativ grosse Mengen Wasserdampf aufnehmen.

Die im Textilsubstrat vorhandenen Endlosfasern aus einem synthetischen Werkstoff beeinflussen in zweierlei Hinsicht eine Reaktion des Textilsubstrats auf Feuchtigkeit. Einerseits können diese Endlosfasern Feuchtigkeit an ihren Oberflächen durch Sorption transportieren und haben daher die Tendenz, Feuchtigkeit an ihren Oberflächen zu verteilen, bevorzugt in Zwischenräumen zwischen benachbarten Endlosfasern mittels Kapillareffekten, und schnell zu trocknen. Andererseits können diese Endlosfasern aus einem synthetischen Werkstoff verwendet werden, um die räumliche Anordnung von Fasern aus Wolle oder Celluloseregenerat im Textilsubstrat zu beeinflussen, sodass die jeweilige Anordnung dieser Endlosfasern indirekt auch Einfluss auf die Reaktion der jeweiligen Fasern aus Wolle und aus Celluloseregenerat haben.

Aufgrund der vorstehend genannten Merkmale (i)-(iv) hat das erfindungsgemässe Textilsubstrat im Hinblick auf eine Reaktion auf Feuchtigkeit die folgenden Eigenschaften:
- Da sowohl der jeweilige aus dem ersten Garn bestehende (Kett- oder Schuss-) Faden als auch der jeweilige aus dem zweiten Garn bestehende (Kett- oder Schuss-) Faden gemäss den Merkmalen (i) und (ii) zumindest abschnittsweise an der ersten Oberfläche und zumindest abschnittsweise an der zweiten Oberfläche verlaufen, ermöglichen somit sowohl der jeweilige aus dem ersten Garn bestehende (Kett- oder Schuss-) Faden als auch der jeweilige aus dem zweiten Garn bestehende (Kett- oder Schuss-) Faden einen Austausch von Feuchtigkeit von der ersten Oberfläche zur zweiten Oberfläche und umgekehrt.
- Zwar umfassen sowohl das erste Garn als auch das zweite Garn jeweils eine oder mehrere Fasern aus Celluloseregenerat. Dadurch, dass der Massenanteil der jeweils im zweiten Garn enthaltenen Celluloseregenerat-Fasern an der jeweiligen Gesamtmasse des zweiten Garns grösser ist als der Massenanteil der jeweils im ersten Garn enthaltenen zweiten Fasern aus Celluloseregenerat an der jeweiligen Gesamtmasse des ersten Garns ist und die jeweiligen Fasern aus Celluloseregenerat Wasser (im flüssigen Zustand) wesentlich schneller und in grösseren Mengen aufnehmen können als die jeweiligen (zumindest im ersten Garn vorhandenen) Fasern aus Wolle, wird von einer Menge Wasser, welche gegebenenfalls (im flüssigen Zustand) mit dem Textilsubstrat in Kontakt gebracht wird, in der Regel jeweils deutlich mehr Wasser von dem zweiten Garn aufgenommen als von dem ersten Garn. Dieser Unterschied hinsichtlich der pro Zeiteinheit aufgenommen Menge Wasser ist dabei umso grösser, je grösser die Differenz zwischen dem Massenanteil der jeweils im zweiten Garn enthaltenen Celluloseregenerat-Fasern an der jeweiligen Gesamtmasse des zweiten Garns und dem Massenanteil der jeweils im ersten Garn enthaltenen zweiten Fasern aus Celluloseregenerat an der jeweiligen Gesamtmasse des ersten Garns ist. Flüssiges Wasser wird demnach überwiegend von den jeweiligen aus dem zweiten Garn bestehenden (Kett- oder Schuss-) Fäden aufgenommen.
- Wird dementsprechend Wasser im flüssigen Zustand mit der ersten Oberfläche des Textilsubstrats in Kontakt gebracht, so wird dieses Wasser bevorzugt über die jeweils an der ersten Oberfläche verlaufenden Längsabschnitte der aus dem zweiten Garn bestehenden (Kett- oder Schuss-) Fäden aufgenommen und somit in das Innere des Textilsubstrats transportiert. Da im Falle des jeweils aus dem zweiten Garn bestehenden (Kett- oder Schuss-) Fadens die Gesamtlänge aller derjenigen Längsabschnitte, welche in dem zumindest einen Bereich der Schicht an der ersten Oberfläche der Schicht verlaufen, kleiner als die Gesamtlänge aller derjenigen Längsabschnitte ist, welche in dem zumindest einen Bereich der Schicht an der zweiten Oberfläche der Schicht verlaufen, sammelt sich der grösste Teil des von der ersten Oberfläche in das Innere des Textilsubstrats eindringenden Wassers in den an der zweiten Oberfläche des Textilsubstrats verlaufenden Längsabschnitten der jeweiligen aus dem zweiten Garn bestehenden (Kett- oder Schuss-) Fäden. Dieses Wasser wird demnach in der Nähe der zweiten Oberfläche des Textilsubstrats konzentriert.
- Bedingt durch die räumliche Anordnung des ersten Garns und des zweiten Garns (gemäss den Merkmalen (iii) und (iv)) verhält sich das erfindungsgemässe Textilsubstrat hinsichtlich einer Aufnahme von Wasser (im flüssigem Zustand) an der ersten Oberfläche schwach hydrophob, während das Textilsubstrat an der zweiten Oberfläche für Wasser (im flüssigen Zustand) hydrophil und stark absorbierend ist.
- Die jeweiligen Fasern aus Wolle sorgen dafür, dass das Textilsubstrat für dampfförmige Feuchtigkeit (Wasserdampf) eine hohe Durchgängigkeit über den gesamten Querschnitt des Textilsubstrats aufweist. Die Durchgängigkeit für dampfförmige Feuchtigkeit (Wasserdampf) ist dementsprechend besonders hoch in den Bereichen des Textilsubstrats, in welchen die jeweiligen aus dem ersten Garn bestehenden (Kett- oder Schuss-) Fäden verlaufen. Wird Wasserdampf von der ersten Oberfläche her in das Textilsubstrat eingeleitet, so hat dies den Effekt, dass der Wasserdampf in das Innere des Textilsubstrats eindringen bzw. das Textilsubstrat durchdringen kann und gegebenenfalls kondensiert. Eine derartige Kondensation des Wasserdampfs findet in der Regel in der Nähe der zweiten Oberfläche des Textilsubstrats statt. Die bei der Kondensation frei werdende Kondensationswärme entsteht demnach in einem relativ grossen Abstand zur ersten Oberfläche. Das hat den Effekt, dass Kondensationswärme im Textilsubstrat in einem von der ersten Oberfläche entfernten Bereich des Textilsubstrats entsteht. Auf diese Weise wird vorteilhafterweise eine Temperaturerhöhung der ersten Oberfläche durch Kondensationswärme weitgehend vermieden. Das durch die Kondensation des Wasserdampfs entstehende Wasser kann dabei bevorzugt von den jeweiligen aus dem zweiten Garn bestehenden (Kett- oder Schuss-) Fäden aufgenommen werden, sodass sich auch dieses Wasser hauptsächlich in der Nähe der zweiten Oberfläche konzentriert (aufgrund Merkmal (iv)).
- Dadurch, dass das erste Garn sowohl Fasern aus Celluloseregenerat und Endlosfasern aus einem synthetischen Werkstoff enthält, führt eine Aufnahme von (flüssigem) Wasser im ersten Garn zu einer inhomogenen Feuchtigkeitsverteilung, zumal die Fasern aus Celluloseregenerat Wasser schnell und in grossen Mengen aufnehmen können, während die Endlosfasern aus einem synthetischen Werkstoff schnell abtrocknen. Bei der Herstellung des ersten Garns kann die jeweilige Endlosfaser aus einem synthetischen Werkstoff (dritte Faser) so geführt werden, dass die jeweilige Endlosfaser hautsächlich am äusseren Rand eines Querschnitts des ersten Garns angeordnet ist, während die Fasern aus Celluloseregenerat im Zentrum oder in der Nähe des Zentrums des Querschnitts angeordnet sind. Eine derartige Verteilung der Fasern hat den Effekt, dass das erste Garn nach einer Aufnahme von flüssigem Wasser in einer an die Oberfläche des Garns angrenzenden Schicht wegen der jeweiligen Endlosfasern aus einem synthetischen Werkstoff rasch trocknen kann. Folglich ist das von dem ersten Garn aufgenommene Wasser nach kurzer Zeit derart räumlich verteilt, dass die Konzentration des Wassers - bezogen auf einen Querschnitt des ersten Garns - in einem zentralen Bereich des Querschnitts maximal ist, während die Konzentration des Wassers am Rand des Querschnitts gering ist, so dass die momentane Verteilung der im ersten Garn enthaltenen Feuchtigkeit einen Gradienten aufweist, welcher auf das Zentrum des Querschnitts des ersten Garns gerichtet ist. Dies führt zu mehreren Vorteilen. Einerseits kann die erste Oberfläche des Textilsubstrats nach einer Aufnahme von Wasser innerhalb einer extrem kurzen Zeit abtrocknen, sodass die erste Oberfläche des Textilsubstrats sich trocken anfühlt. Andererseits kann das Wasser, welches in den jeweiligen Fasern aus Celluloseregenerat enthalten ist, dosiert zur Oberfläche des ersten Garns abgegeben werden und dort verdampfen. Letzteres führt zu einer dosierten Kühlung der ersten Oberfläche des Textilsubstrats, zumal das erste Garn aufgrund des Merkmals (iv) über eine grössere Länge an der ersten Oberfläche verläuft als an der zweiten Oberfläche, sodass die vorstehend genannte Verdampfung von Wasser und eine mit der Verdampfung einhergehende Kühlung hauptsächlich an der ersten Oberfläche des Textilsubstrats stattfindet.
- Da das jeweilige zweite Garn zumindest über einen bestimmten Teil seiner Länge auch an der ersten Oberfläche verläuft (Merkmale (ii) und (iv)), kann Feuchtigkeit über das zweite Garn von der zweiten Oberfläche zur ersten Oberfläche gelangen und von den jeweiligen an der ersten Oberfläche verlaufenden Längsabschnitten des zweiten Garns desorbiert und verdampft werden. Dieser Prozess ermöglicht ebenfalls eine dosierte Kühlung der ersten Oberfläche des Textilsubstrats.

Die vorstehend genannten Eigenschaften sind insbesondere vorteilhaft im Hinblick auf eine Verwendung des Textilsubstrats als Sitzbezug einer Sitzeinrichtung und schaffen dabei insbesondere die Voraussetzung für ein passiv klimatisiertes Sitzen mit einem verbesserten Sitzkomfort während langen Sitzphasen.

Wird das Textilsubstrat als Sitzbezug verwendet, dann ist es insbesondere vorteilhaft, wenn die erste Oberfläche des Textilsubstrats als Sitzfläche (d.h. als rechte Warenseite des Sitzbezugs) dient. Wenn nämlich eine auf dem Textilsubstrat mit Körperkontakt zur ersten Oberfläche des Textilsubstrats sitzende Person beim Sitzen während einer langen Sitzphase ständig Feuchtigkeit (Wasser im flüssigen Zustand und/oder Wasserdampf) auf die erste Oberfläche in dem zumindest einen Bereich des Textilsubstrats abgibt, dann zeigen sich mehrere vorteilhafte Effekte.

Zum einen verteilt sich verteilt sich die Feuchtigkeit (d.h. das über die erste Oberfläche in das Textilsubstrat eindringende Wasser und das durch Kondensation des Wasserdampfs im Textilsubstrat entstehende Wasser) in dem zumindest einen Bereich des Textilsubstrats aufgrund der räumlichen Anordnung der aus dem ersten Garn bzw. dem zweiten Garn bestehenden (Kett- oder Schuss-) Fäden und der Anordnung der jeweiligen Fasern im ersten Garn bzw. im zweiten Garn räumlich in verschiedenen Schichten, welche sich im Wesentlichen parallel zu den jeweiligen Oberflächen des Textilsubstrats erstrecken und in einer Richtung senkrecht zum Textilsubstrat aufeinanderfolgend angeordnet sind, wobei die jeweilige Konzentration der Feuchtigkeit jeweils als Funktion des Abstands von der ersten Oberfläche variiert. Die Konzentration der Feuchtigkeit nimmt dabei im Textilsubstrat als Funktion des Abstands von der ersten Oberfläche in der Regel stark nichtlinear in Richtung auf die zweite Oberfläche zu, sodass die Konzentration der Feuchtigkeit im Textilsubstrat als Funktion des Abstands von der ersten Oberfläche einen nichtlinearen Gradienten (im Folgenden "nichtlinearer Feuchtigkeitsgradient") zeigt. Dabei weist die Konzentration der Feuchtigkeit ein Maximum in der Nähe der zweiten Oberfläche, d.h. in einem Abstand zur ersten Oberfläche, auf. Andererseits ist die Konzentration der Feuchtigkeit in einer an die erste Oberfläche angrenzenden Schicht innerhalb eines bestimmten Abstands von der ersten Oberfläche derart gering, dass die sitzende Person die erste Oberfläche als trocken empfindet. Dabei ist es ein besonderer Vorteil des erfindungsgemässen Textilsubstrats, dass diese "trockene" Schicht an der ersten Oberfläche jeweils existieren kann, solange die Sättigungsgrenze des Textilsubstrats bezüglich Feuchtigkeit noch nicht erreicht ist, gegebenenfalls also beliebig lange, sofern dafür gesorgt ist, dass die Sättigungsgrenze des Textilsubstrats nicht erreicht wird.

Der nichtlineare Verlauf der Konzentration der Feuchtigkeit als Funkion des Abstandes von der ersten Oberfläche hat auch Vorteile hinsichtlich der Trocknung des Textilsubstrats und der Kühlung des Substrats infolge einer Verdunstung von Wasser. Einerseits wird relativ wenig Wasser an der ersten Oberfläche verdunstet, sodass die erste Oberfläche dosiert durch Verdunstung gekühlt wird. Weiterhin verliert die Tatsache an Bedeutung, dass Fasern aus Wolle eine wesentlich längere Zeit zum Trocknen benötigen als Fasern aus Celluloseregenerat.

Dadurch, dass der in das Textilsubstrat eindringende Wasserdampf in der Nähe der zweiten Oberfläche kondensieren kann und somit die bei der Kondensation frei werdende Kondensationswärme entfernt von der ersten Oberfläche entsteht und andererseits die erste Oberfläche durch Verdunstung von Wasser stets dosiert gekühlt wird, kann die Temperatur des Textilsubstrats an der ersten Oberfläche auf einen Wert stabilisiert werden, welcher in der Nähe der Körpertemperatur der sitzenden Person liegt. Letzteres gilt auch dann, wenn die sitzende Person das Sitzen nach einer längeren Sitzphase unterbricht. Während dieser Unterbrechung wird die erste Oberfläche, da sie Kühlung der ersten Oberfläche durch Verdunstung von Wasser dosiert erfolgt, nur sehr langsam abkühlen. Das hat den Vorteil, dass die sitzende Person das Sitzen nach einer längeren Sitzphase unterbrechen und das Sitzen nach der Unterbrechung fortsetzen kann, ohne dass sich für diese Person eine Abkühlung der ersten Oberfläche im Anschluss an die Unterbrechung auf unangenehme Weise bemerkbar macht.

Eine Ausführungsform des Textilsubstrats ist dadurch charakterisiert, dass das erste Garn eine zentrale Längsachse aufweist und eine die zentrale Längsachse umgebende und sich entlang der zentralen Längsachse erstreckende Kernzone und eine die Kernzone umgebende, sich entlang der zentralen Längsachse erstreckende Mantelzone umfasst und die jeweiligen ersten Fasern, die jeweiligen zweiten Fasern und die jeweiligen dritten Fasern im ersten Garn derart räumlich verteilt angeordnet sind, dass
- eine Konzentration der zweiten Fasern (aus Celluloseregenerat) in der Kernzone grösser ist als in der Mantelzone und
- eine Konzentration der ersten Fasern (aus Wolle) in der Mantelzone grösser ist als in der Kernzone und
- eine Konzentration der dritten Fasern (jeweils in Form einer Endlosfaser aus einem synthetischen Werkstoff) in der Mantelzone grösser ist als in der Kernzone.

Dadurch wird erreicht, dass Feuchtigkeit (Wasser und/oder Wasserdampf) vom ersten Garn derart aufgenommen wird, dass die Mantelzone der jeweiligen aus dem ersten Garn bestehenden (Kett- oder Schuss-) Fäden wegen der jeweiligen dritten Fasern schnell trocknet und trocken bleibt und wegen der Fasern aus Wolle einen Transport von Wasserdampf durch die Mantelzone gewährleisten kann, während andererseits in das Textilsubstrat eindringendes Wasser oder im Textilsubstrat kondensiertes Wasser von den zweiten Fasern aus Celluloseregenerat in der Kernzone aufgenommen wird. Dabei entsteht im ersten Garn eine Verteilung der Feuchtigkeit, welche eine schnelle und dennoch dosierte Verdunstung von Wasser ermöglicht. Letzteres hat den Vorteil, dass die Oberflächen des Textilsubstrats, insbesondere die erste Oberfläche des Textilsubstrats, in einer besonders kurzen Zeit abtrocknen und die jeweiligen Oberflächen des Textilsubstrats angenehm kühl wirken.

Eine weitere Ausführungsform des Textilsubstrats ist dadurch charakterisiert, dass die zweite Faser (aus Celluloseregenerat) im ersten Garn als Stapelfaser ausgebildet ist. Da Stapelfasern in der Regel relativ kurz sind, wird dadurch erreicht, dass die jeweiligen Stapelfasern im ersten Garn häufig derart angeordnet sind, dass eines ihrer Enden bis an die Oberfläche des ersten Garns ragt. Auf diese Weise kann die jeweilige zweite Faser schneller Feuchtigkeit aufnehmen (über ein an die Oberfläche des ersten Garns ragendes Ende der Faser).

Die jeweilige dritte Faser des ersten Garns kann beispielsweise ein Polymer oder ein Gemisch aus verschiedenen Polymeren umfassen. Beispielsweise kann die jeweilige dritte Faser eines oder mehrere der Polymere Polyamid, Polyester oder Polyolefin umfassen.

Im Falle einer weiteren Ausführungsform des Textilsubstrats umfasst das erste Garn die jeweiligen ersten Fasern (aus Wolle) mit einem Anteil von 25-55 Gewichtsprozent, die jeweiligen zweiten Fasern (aus Celluloseregenrat) mit einem Anteil von 25-55 Gewichtsprozent und die jeweiligen dritten Fasern (in Form einer Endlosfaser aus einem synthetischen Werkstoff) mit einem Anteil von 5-40 Gewichtsprozent. In diesem Fall ermöglichen die Fasern aus Celluloseregenrat eine angemessene dosierte Verdunstung von Wasser. Dadurch wird die Gefahr reduziert, dass Feuchtigkeit, welche von der ersten Oberfläche her in das Textilsubstrat eindringt, von dem jeweiligen zweiten Garn in einem Masse aufgenommen wird, dass sich die Feuchtigkeit im Textilsubstrat von der zweiten Oberfläche bis zur ersten Oberfläche staut. Somit wird verhindert, dass ein übermässiger Rückstau von Feuchtigkeit an der zweiten Oberfläche des Textilsubstrats auftreten kann, und erreicht, dass die erste Oberfläche des Textilsubstrats trocken bleibt und das Textilsubstrat nicht mit Feuchtigkeit gesättigt wird.

Bei einer weiteren Ausführungsform des Textilsubstrats ist der Gewichtsanteil der jeweiligen ersten Fasern und der jeweiligen zweiten Fasern am Gesamtgewicht des ersten Garns grösser als der Gewichtsanteil der jeweiligen dritten Fasern am Gesamtgewicht des ersten Garns. In diesem Fall ist vorteilhafterweise gewährleistet, dass das jeweilige erste Garn durch konventionelle Techniken, insbesondere durch Spinnen, herstellbar ist und einen geringen Durchmesser haben kann.

Im Falle einer weiteren Ausführungsform des Textilsubstrats umfasst das zweite Garn 50-100 Gewichtsprozent Celluloseregenerat-Fasern. Dadurch wird erreicht, dass ein besonders grosser Teil der Feuchtigkeit, welche gegebenenfalls von dem Textilsubstrat aufgenommen wird, von dem zweiten Garn aufgenommen werden kann. Das hat insbesondere den Vorteil, dass Feuchtigkeit, welche mit der ersten Oberfläche des Textilsubstrats in Kontakt gebracht wird, besonders effizient über das zweite Garn zur zweiten Oberfläche transportiert werden kann. Ausserdem wird die Feuchtigkeit im Textilsubstrat derart verteilt, dass ein besonders grosser, von der ersten Oberfläche zur zweiten Oberfläche gerichteter Feuchtigkeitsgradient entsteht.

Hinsichtlich der Fasern aus Celluloseregenerat, welche im ersten Garn oder im zweiten Garn enthaltenen sind, sind eine Reihe von Varianten möglich. Vorzugsweise besteht jede einzelne der jeweiligen zweiten Fasern des ersten Garns und/oder jede einzelne der jeweiligen Celluloseregenerat-Fasern des zweiten Garns aus einem der Materialien Viskose (CV), Modal (CMD) oder Lyocell (CLY) oder Mischungen dieser Materialien. Das erste und das zweite Garn können auch jeweils mehre verschiedene Celluloseregenerat-Fasern enthalten, welche sich dadurch unterscheiden, dass sie aus verschiedenen der vorstehend genannten Materialien oder aus verschiedenen Mischungen der vorstehend genannten Materialien zusammengesetzt sind.

Weiterhin müssen der mindestens eine aus dem ersten Garn bestehende Kettfaden oder Schussfaden und der mindestens eine aus dem zweiten Garn bestehende Kettfaden oder Schussfaden nicht ein einfaches Garn (Einfachgarn) sein: Der mindestens eine aus dem ersten Garn bestehende Kettfaden oder Schussfaden kann beispielsweise auch ein Zwirn sein, welcher mehrere miteinander verzwirnte Einfachgarne enthält, wobei das erste Garn das jeweilige Einfachgarn bildet; entsprechend kann der mindestens eine aus dem zweiten Garn bestehende Kettfaden oder Schussfaden ein Zwirn sein, welche mehrere miteinander verzwirnte Einfachgarne enthält, wobei das zweite Garn das jeweilige Einfachgarn bildet. Dadurch wird eine grosse mechanische Belastbarkeit der jeweiligen Garne und des Textilsubstrats, insbesondere eine grosse Zugfestigkeit der jeweiligen Garne und des Textilsubstrats, gewährleistet.

Eine weitere Ausführungsform des Textilsubstrats ist dadurch charakterisiert, dass mehrere Kettfäden und/oder mehrere Schussfäden aus dem ersten Garn bestehen und mehrere Kettfäden und/oder mehrere Schussfäden aus dem zweiten Garn bestehen und sich die jeweiligen Kettfäden und Schussfäden derart überkreuzen, dass ein aus dem ersten Garn bestehender Kettfaden einen oder mehrere Bindungspunkte jeweils mit aus dem zweiten Garn bestehenden Schussfäden bildet. Alternativ können sich die jeweiligen Kettfäden und Schussfäden derart überkreuzen, dass ein aus dem ersten Garn bestehender Schussfaden einen oder mehrere Bindungspunkte jeweils mit aus dem zweiten Garn bestehenden Kettfäden bildet. Analog kann ein aus dem zweiten Garn bestehender Kettfaden auch einen oder mehrere Bindungspunkte jeweils mit aus dem ersten Garn bestehenden Schussfäden bilden. Alternativ kann auch ein aus dem zweiten Garn bestehender Schussfaden einen oder mehrere Bindungspunkte jeweils mit aus dem ersten Garn bestehenden Kettfäden bilden.

In diesem Kontext bildet ein Kettfaden mit bestimmten Schussfäden einen "Bindungspunkt", wenn der Kettfaden einerseits drei nebeneinander angeordneten Schussfäden derart überkreuzt, dass der Kettfaden den mittleren der vorstehend genannten drei Schussfäden auf einer Seite des Textilsubstrats überkreuzt und die anderen beiden der vorstehend genannten drei Schussfäden auf der anderen Seite des Textilsubstrats überkreuzt. In diesem Fall bezeichnet "Bindungspunkt" jeweils eine Stelle (Kreuzungspunkt), an welcher der Kettfaden den mittleren der drei Schussfäden überkreuzt.

Entsprechend bildet ein Schussfaden mit bestimmten Kettfäden einen "Bindungspunkt", wenn der Schussfaden einerseits drei nebeneinander angeordneten Kettfäden derart überkreuzt, dass der Schussfaden den mittleren der vorstehend genannten drei Kettfäden auf einer Seite des Textilsubstrats überkreuzt und die anderen beiden der vorstehend genannten drei Kettfäden auf der anderen Seite des Textilsubstrats überkreuzt. In diesem Fall bezeichnet "Bindungspunkt" jeweils eine Stelle (Kreuzungspunkt), an welcher der Schussfaden den mittleren der drei Kettfäden überkreuzt.

Dadurch, dass ein aus dem ersten Garn bestehender Kettfaden einen oder mehrere Bindungspunkte jeweils mit aus dem zweiten Garn bestehenden Schussfaden bildet, wird erreicht, dass der aus dem ersten Garn bestehende Kettfaden an dem jeweiligen Bindungspunkt an einer besonders grossen Fläche mit dem aus dem zweiten Garn bestehenden Schussfaden in Kontakt ist. Dies hat den Vorteil, dass Feuchtigkeit aus dem jeweiligen ersten Garn an einem der jeweiligen Bindungspunkte besonders effizient an das jeweilige zweite Garn abgeben werden kann und umgekehrt. Auf diese Weise kann Feuchtigkeit insbesondere an den jeweiligen Bindungspunkt effizient zwischen einem ersten Garn und dem jeweiligen zweiten Garn übertragen werden. Ein entsprechender Vorteil wird erzielt, wenn ein aus dem ersten Garn bestehender Schussfaden einen oder mehrere Bindungspunkte jeweils mit aus dem zweiten Garn bestehenden Kettfäden bildet.

Das erfindungsgemässe Textilsubstrat hat weiterhin den Vorteil, dass es auf einfache Weise mit verschiedenen Herstellungsverfahren hergestellt werden kann, z.B. als Gewebe oder als Gewirk oder Gestrick in Form eines Raschel oder Malimo.

Im Falle einer weiteren Ausführungsform des Textilsubstrats ist die jeweilige erste Faser und/oder die jeweilige zweite Faser und/oder die jeweilige dritte Faser und/oder die jeweilige Celluloseregenerat-Faser des zweiten Garns und/oder das erste Garn als Ganzes und/oder das zweite Garn als Ganzes und/oder das Textilsubstrat als Ganzes mit einem flammhemmenden Mittel imprägniert. Dank dieser Imprägnierung kann erreicht werden, dass das Textilsubstrat für den Einsatz in vielen Bereichen, in denen hohe Sicherheitsstandards hinsichtlich Brandschutz erfüllt werden müssen, geeignet ist, z.B. für Anwendungen in Automobilen, Flugzeugen, Eisenbahnzügen, öffentlichen Gebäuden, etc.

Im Hinblick auf eine Verwendung des Textilsubstrats als Sitzbezug können beispielsweise der Wasserdampfdurchgangswiderstand und/oder der Wärmewiderstand des Textilsubstrats optimiert werden, um zu erreichen, dass eine auf dem Textilsubstrat sitzende Person auch nach einer langen Sitzphase das Sitzen hinsichtlich der Feuchtigkeit und der Temperatur, welche die Person beim Kontakt mit dem Textilsubstrat wahrnimmt, als möglichst angenehm ("klimatisiert") empfindet.

Zu diesem Zweck kann das jeweilige Textilsubstrat vorzugsweise derart ausgelegt werden, dass es hinsichtlich einer Durchdringung des Textilsubstrats mit Wasserdampf einen Wasserdampfdurchgangswiderstand Rₑₜ mit einem Rₑₜ-Wert kleiner als 9 m²Pa/W (gemessen auf der Grundlage eines Hautmodells für menschliche Haut mit einem international genormten Prüfungsverfahren gemäss DIN EN 31092 bei einer Temperatur von 35 °C und einer relativen Feuchtigkeit von 40%) aufweist. Weiterhin kann das Textilsubstrat vorzugsweise derart ausgelegt werden, dass es einen Wärmedurchgangswiderstand R_{ct} aufweist, welcher kleiner als 24 10⁻³ m²K/W (gemessen auf der Grundlage eines Hautmodells für menschliche Haut mit einem international genormten Prüfungsverfahren gemäss DIN EN 31092 bei einer Temperatur von 20 °C und einer relativen Feuchtigkeit von 65%) ist. Sowohl der Wasserdampfdurchgangswiderstand Rₑₜ als auch der Wärmedurchgangswiderstand R_{ct} des jeweiligen Textilsubstrats hängen von verschiedenen Parametern ab, u.a. von der Dichte der jeweiligen Kettfäden und Schussfäden im Textilsubstrat und der Dichte und der Art der in den jeweiligen Kettfäden und Schussfäden enthaltenen Fasern, und können dementsprechend durch Variieren dieser Parameter verändert werden.

Wenn der Wasserdampfdurchgangswiderstand Rₑₜ des Textilsubstrats kleiner als 9 m²Pa/W ist, kann beim Sitzen einer Person auf einem derartigen Textilsubstrat gewährleistet werden, dass das Textilsubstrat für den von der Person beim Sitzen an das Textilsubstrat abgegebenen Wasserdampf hinreichend durchlässig ("atmungsaktiv") ist, sodass der an das Textilsubstrat abgegebene Wasserdampf die Temperatur des Textilsubstrats und die jeweils im Textilsubstrat enthaltene Feuchtigkeit auch nach einer langen Sitzphase allenfalls in einer für die jeweilige Person akzeptablen Weise ändert. Wenn der Wärmedurchgangswiderstand R_{ct} des Textilsubstrats kleiner als 24 10⁻³ m²K/W ist, kann beim Sitzen einer Person auf einem derartigen Textilsubstrat gewährleistet werden, dass das Textilsubstrat genügend Wärme abzuleiten vermag, um zu erreichen, dass das Textilsubstrat beim Sitzen ausreichend gekühlt wird und sich die Temperatur des Textilsubstrats auch nach einer langen Sitzphase nicht in einem für die jeweilige Person unakzeptablen Mass erhöht. So kann verhindert werden, dass die sitzende Person am Textilsubstrat einen Wärmestau spürt oder veranlasst wird, in den das Textilsubstrat berührenden Bereichen ihres Körpers zu schwitzen und dabei übermässig viel Schweiss in das Textilsubstrat abzusondern.

Sollte das Textilsubstrat mit Farbstoffen versehen werden, um das Textilsubstrat abweichend von den natürlichen Farben der im Textilsubstrat enthaltenden Fasern zu färben, so ist es hilfreich, das Textilsubstrat mit den jeweiligen Farbstoffen derart zu färben, dass das Textilsubstrat (verglichen mit einem entsprechenden, nicht gefärbten Textilsubstrat) Infrarot-Strahlung nicht übermässig stark absorbiert, weil sich das Textilsubstrat bei einer Einstrahlung von Infrarot-Strahlung ansonsten derart aufheizen würde, dass ein klimatisiertes Sitzen auf dem Textilsubstrat nicht mehr gewährleisten werden kann.

Um das vorstehend genannte Ziel zu erreichen, kann das erfindungsgemässe Textilsubstrat vorzugsweise derart gefärbt sein, dass es eine Reflektivität von Infrarot-Strahlung im Wellenlängenbereich von 800 nm bis 2000 nm im Durchschnitt von mindestens 50% aufweist. Die Grösse der Reflektivität des Textilsubstrats kann dabei mit konventionellen Mitteln beispielsweise durch eine entsprechende Wahl von Farbstoffen, durch die jeweils zum Färben verwendete Menge von Farbstoffen oder durch eine Wahl der in den jeweiligen Garnen enthaltenen Fasern derart beeinflusst werden, dass die vorstehend genannte Bedingung eingehalten wird. Das vorstehend genannte Textilsubstrat hat den Vorteil, dass die Reflektivität des Textilsubstrats - verglichen mit der Reflektivität des entsprechenden ungefärbten Textilsubstrats - im Wellenlängenbereich von 800 nm bis 2000 nm verhältnismässig wenig reduziert ist. Dieses Textilsubstrat reflektiert somit einen relativ grossen Teil der Infrarot-Strahlung im Wellenlängenbereich von 800 nm bis 2000 nm, sodass das Textilsubstrat bei Einwirkung einer derartigen Infrarot-Strahlung nur verhältnismässig wenig aufgeheizt wird und sich die Temperatur des Textilsubstrats nur wenig erhöht. Demzufolge ändert sich die Intensität einer vom Textilsubstrat gegebenenfalls abgegebenen Wärmestrahlung verhältnismässig wenig, wenn Infrarot-Strahlung im Wellenlängenbereich von 800 nm bis 2000 nm auf das Textilsubstrat einwirkt, sodass das Textilsubstrat unter den genannten Umständen wenig zu einer Aufheizung seiner Umgebung beiträgt. Das Textilsubstrat eignet sich deshalb hervorragend für einen Einsatz in Räumen, die von Sonnenlicht durchflutet werden und gegebenenfalls durch Wärmestrahlung aufgeheizt werden könnten, z.B. für eine Verwendung als Sitzbezug für Sitze in Automobilen oder anderen Verkehrsmitteln oder in Wohnräumen.

Das erfindungsgemässe Textilsubstrat ist beispielsweise geeignet als Bezugsstoff zum Beziehen eines Sitzes und/oder einer Rückenlehne und/oder eines Seitenteils und/oder einer Armlehne einer Sitzeinrichtung, wobei die erste Oberfläche die jeweils nach aussen gerichtete Seite (rechte Warenseite) des Bezugsstoffs bildet.

Gegenstand der Erfindung ist dementsprechend auch eine Sitzeinrichtung, mit einem Sitz und/oder einer Rückenlehne und/oder einem Seitenteil und/oder einer Armlehne, wobei der Sitz ein erfindungsgemässes Textilsubstrat umfasst und die erste Oberfläche des Textilsubstrats eine äussere Oberfläche des Sitzes bildet und/oder die Rückenlehne ein erfindungsgemässes Textilsubstrat umfasst und die erste Oberfläche des Textilsubstrats eine äussere Oberfläche der Rückenlehne bildet und/oder das Seitenteil ein erfindungsgemässes Textilsubstrat umfasst und die erste Oberfläche des Textilsubstrats eine äussere Oberfläche des Seitenteils bildet und/oder die Armlehne ein erfindungsgemässes Textilsubstrat umfasst und die erste Oberfläche des Textilsubstrats eine äussere Oberfläche der Armlehne bildet.

Weitere Einzelheiten und insbesondere beispielhafte Ausführungsformen der Erfindung werden im Folgenden anhand der beigefügten Zeichnungen erläutert. Es zeigen:
- Fig. 1: eine perspektivische Darstellung eines erfindungsgemässen Textilsubstrats in Form eines Gewebes;
- Fig. 2A: ein Bereich des Textilsubstrats gemäss Fig. 1, mit Kettfäden aus einem ersten Garn und Schussfäden aus einem ersten Garn und einem zweiten Garn, in einer Draufsicht von einer Seite des Textilsubstrats;
- Fig. 2B: der Bereich des Textilsubstrats gemäss Fig. 2A, jedoch in einer Draufsicht von der anderen Seite;
- Fig. 3: einen Querschnitt durch den Bereich des Textilsubstrats gemäss Fig. 2A bzw. 2B entlang der Line III-III in Fig. 2A und 2B;
- Fig. 4: einen Querschnitt durch das erste Garn gemäss Fig. 2A;
- Fig. 5: Querschnitt durch ein erfindungsgemässes Textilsubstrat und eine räumliche Verteilung von Wasser (in flüssiger Form) in dem Textilsubstrat als Funktion der Zeit, mit einem Tropfen Wasser an einer Oberfläche des Textilsubstrats an einem Anfangszeitpunkt t=t0 (Fig. 5A) und einer Darstellung der Ausbreitung des in dem Tropfen enthaltenen Wassers in dem Textilsubstrat zu späteren Zeitpunkten t1 (Fig. 5B) und t2 (Fig. 5C);
- Fig. 6: Querschnitt durch ein erfindungsgemässes Textilsubstrat und Verteilung von Feuchtigkeit im Textilsubstrat nach einer Beaufschlagung des Textilsubstrats mit Wasserdampf auf einer Seite des Textilsubstrats;
- Fig. 7: Draufsicht auf ein erfindungsgemässes Textilsubstrat in Form eines Malimo;
- Fig. 8: Draufsicht auf ein erfindungsgemässes Textilsubstrat in Form eines Raschel;
- Fig. 9: Sitzeinrichtung mit äusseren Oberflächen, welche durch eine Oberfläche eines Textilsubstrats gemäss der Erfindung gebildet sind.

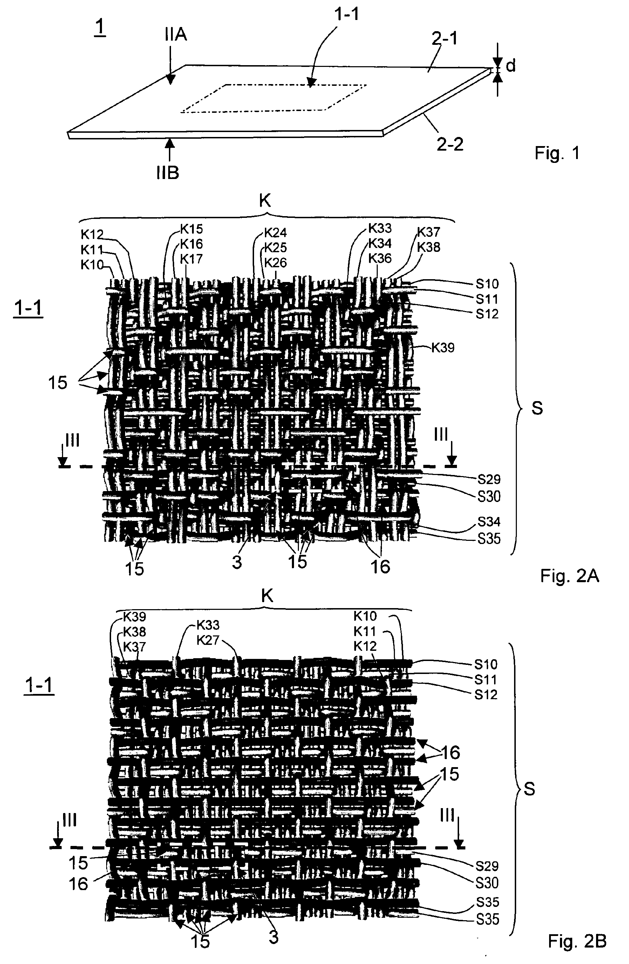

Fig. 1 zeigt eine perspektivische Ansicht eines erfindungsgemässen Textilsubstrats 1 in Form eines Gewebes, welches sich im vorliegenden Beispiel parallel zu einer Ebene erstreckt. Das Textilsubstrat 1 bildet in diesem Fall eine ebene Schicht mit der Dicke d und weist eine erste Oberfläche 2-1 und eine der ersten Oberfläche 2-1 gegenüberliegende zweite Oberfläche 2-2 auf. In Fig. 1 zeigt ein Pfeil IIA senkrecht auf die erste Oberfläche 2-1, ein Pfeil IIB zeigt senkrecht auf die zweite Oberfläche 2-2.

Fig. 2A zeigt einen in Fig. 1 gekennzeichneten Bereich 1-1 des Textilsubstrats 1 in einer Draufsicht auf die erste Oberfläche 2-1 in Richtung des Pfeils IIA, während Fig. 2B den Bereich 1-1 des Textilsubstrats 1 in einer Draufsicht auf die zweite Oberfläche 2-2 in Richtung des Pfeils IIB darstellt.

Wie Fig. 2A und 2B andeuten, ist das Textilsubstrat 1 zusammengesetzt aus einer Kette K, bestehend aus einer Mehrzahl von Kettfäden Ki, und aus einem Schuss S, bestehend aus einer Mehrzahl von Schussfäden Sj, wobei die Zeichen i und j in diesem Zusammenhang Zahlen symbolisieren, welche verwendet werden, um die jeweiligen Kettfäden der Kette K und die jeweiligen Schussfäden des Schusses S zu nummerieren und entsprechend zu identifizieren.

Wie Fig. 2A und 2B zu entnehmen ist, umfasst der Bereich 1-1 die Kettfäden Ki mit i=10, ..., 39 und die Schussfäden Sj mit j=10, ..., 35, d.h. insgesamt 30 Kettfäden und 26 Schussfäden. Wie ersichtlich, überkreuzt jeder der dargestellten Kettfäden Ki mehrere der dargestellten Schussfäden Sj jeweils an einem Kreuzungspunkt derart, dass zumindest einzelne Längsabschnitte des jeweiligen Kettfadens an der Oberfläche 2-1 verlaufen und andere einzelne Längsabschnitte des jeweiligen Kettfadens Ki an der Oberfläche 2-2 verlaufen. Entsprechend überkreuzt jeder der dargestellten Schussfäden Sj mehrere der dargestellten Kettfäden Ki jeweils an einem Kreuzungspunkt derart, dass zumindest einzelne Längsabschnitte des jeweiligen Schussfadens Sj an der Oberfläche 2-1 verlaufen und andere einzelne Längsabschnitte des jeweiligen Kettfadens Ki an der Oberfläche 2-2 verlaufen. Demnach sind die alle Kettfäden und Schussfäden des Textilsubstrats derart verbunden, dass die Kette K und der Schuss S gemeinsam eine Schicht bilden.

Wie aus Fig. 2A und 2B ersichtlich, ist das Textilsubstrat aus einem ersten Garn 15 und einem zweiten Garn 16 gefertigt. Dabei bestehen im vorliegenden Beispiel alle Kettfäden Ki der Kette K aus dem ersten Garn 15, wobei der jeweilige Kettfaden Ki beispielsweise aus einem einzigen ersten Garn 15 bestehen oder mehrere erste Garne 15, welche zu einem Zwirn verarbeitet sind, umfassen kann. Der Schuss S hingegen umfasst ausser Schussfäden, welche aus dem ersten Garn 15 (in Form eines einzelnen ersten Garns 15 oder eines aus mehreren ersten Garnen 15 gebildeten Zwirns) bestehen, auch Schussfäden, welche aus dem zweiten Garn 16 (in Form eines einzelnen zweiten Garns 16 oder eines aus mehreren zweiten Garnen 16 gebildeten Zwirns) bestehen.

Wie aus Fig. 2A und 2B ersichtlich, bestehen der Schuss S zumindest im Bereich 1-1 abwechselnd aus einem aus dem ersten Garn 15 bestehenden Schussfaden und einem aus dem zweiten Garn 16 bestehenden Schussfaden, sodass jeweils ein aus dem ersten Garn 15 bestehender Schussfaden zwischen zwei aus dem zweiten Garn 16 bestehenden Schussfäden angeordnet ist.

Das erste Garn 15 ist ein Dreikomponentengarn, welches Fasern aus Wolle, Fasern aus Celluloseregenerat und mindestens eine Endlosfaser aus einem synthetischen Werkstoff umfasst.

Das zweite Garn 16 enthält Celluloseregenerat-Fasern, wobei der prozentuale Anteil der Masse ("Massenanteil") der jeweils im zweiten Garn 16 enthaltenen Celluloseregenerat-Fasern an der jeweiligen Gesamtmasse des zweiten Garns 16 grösser ist als der prozentuale Anteil der Masse ("Massenanteil") der jeweils im ersten Garn 15 enthaltenen zweiten Fasern aus Celluloseregenerat an der jeweiligen Gesamtmasse des ersten Garns 15 ist.

In Fig. 2A und 2B sind die jeweiligen Kettfäden und Schussfäden jeweils als 3-dimensionale Objekte in einer Draufsicht auf das Textilsubstrat 1 dargestellt, wobei gekrümmte Oberflächen dieser Objekte jeweils mithilfe verschiedener Grautöne dargestellt sind und die jeweils aus dem ersten Garn 15 bestehenden Kett- oder Schussfäden jeweils in einem helleren Grauton als die jeweils aus dem zweiten Garn 16 bestehenden Schussfäden dargestellt sind.

Um die Eigenschaften der jeweiligen Kettfäden charakterisieren zu können, wird im Folgenden angenommen, dass jeder Kettfaden Ki im Bereich 1-1 aus einer Mehrzahl aufeinanderfolgend angeordneter Längsabschnitte zusammengesetzt ist, deren Längen durch die den Kettfaden Ki kreuzenden Schussfäden bestimmt sind, wobei die beiden (Kreuzungs-) Punkte, an denen zwei benachbarte Schussfäden Sj und S(j+1) den jeweiligen Kettfaden Ki überkreuzen, jeweils die beiden Enden eines der jeweiligen Längsabschnitte des Kettfadens Ki definieren.

Im Hinblick auf die vorliegende Erfindung ist in diesem Zusammenhang relevant, dass die vorstehend genannten Längsabschnitte des jeweiligen Kettfadens Ki hinsichtlich ihrer räumlichen Anordnung bezüglich der Oberflächen 2-1 und 2-2 nicht identisch sind: einzelne dieser Längsabschnitte des jeweiligen Kettfadens Ki erstrecken sich dabei zwischen den beiden benachbarten Schussfäden, welche der jeweilige Längsabschnitt an seinen beiden Enden überkreuzt, derart, dass eines der beiden Enden des Längsabschnitts an einer der Oberflächen 2-1 bzw. 2-2 liegt und das andere der beiden Enden des Längsabschnitts an der jeweils anderen der Oberflächen 2-1 bzw. 2-2 liegt; andere dieser Längsabschnitte des jeweiligen Kettfadens Ki erstrecken sich hingegen ausschliesslich an einer der beiden Oberfläche 2-1 bzw. 2-2, d.h. entweder ausschliesslich an der Oberfläche 2-1 oder ausschliesslich an der Oberfläche 2-2.

Um die Eigenschaften der jeweiligen Schussfäden charakterisieren zu können, wird im Folgenden angenommen, dass jeder Schussfaden Sj im Bereich 1-1 aus einer Mehrzahl aufeinanderfolgend angeordneter Längsabschnitte zusammengesetzt ist, deren Längen durch die den Schussfaden Sj kreuzenden Kettfäden bestimmt sind, wobei die beiden (Kreuzungs-) Punkte, an denen zwei benachbarte Kettfäden Ki und K(i+1) den jeweiligen Schussfaden Sj überkreuzen, jeweils die beiden Enden eines der jeweiligen Längsabschnitte des Schussfadens Sj definieren.

Im Hinblick auf die vorliegende Erfindung ist in diesem Zusammenhang relevant, dass die vorstehend genannte Längsabschnitte des jeweiligen Schussfadens Sj hinsichtlich ihrer räumlichen Anordnung bezüglich den Oberflächen 2-1 und 2-2 nicht identisch sind: einzelne dieser Längsabschnitte des jeweiligen Schussfadens Sj erstrecken sich dabei zwischen den beiden benachbarten Kettfäden, welche der jeweilige Längsabschnitt des Schussfadens Sj an seinen beiden Enden überkreuzt, derart, dass eines der beiden Enden des Längsabschnitts an einer der Oberflächen 2-1 bzw. 2-2 liegt und das andere der beiden Enden des Längsabschnitts an der jeweils anderen der Oberflächen 2-1 bzw. 2-2 liegt; andere dieser Längsabschnitte des jeweiligen Schussfadens Sj erstrecken sich hingegen ausschliesslich an einer der beiden Oberfläche 2-1 bzw. 2-2, d.h. entweder ausschliesslich an der Oberfläche 2-1 oder ausschliesslich an der Oberfläche 2-2.

Wie aus Fig. 2A und Fig. 2B entnehmbar ist, weisen im Bereiche 1-1 alle aus dem ersten Garn 15 bestehenden Kettfäden (K10-K39) und Schussfäden (S11, S13, S15, S17, S19, S21, S23, S25, S27, S29, S31, S33 und S35) die folgende Asymmetrie hinsichtlich ihres Verlaufs bezüglich der Oberflächen 2-1 und 2-2 des Textilsubstrats 1 auf: Im Falle jedes aus dem ersten Garn 15 bestehenden Kettfadens oder Schussfadens ist die Gesamtlänge aller derjenigen Längsabschnitte, welche in dem Bereich 1-1 an der ersten Oberfläche 2-1 des Textilsubstrats 1 verlaufen, grösser als die Gesamtlänge aller derjenigen Längsabschnitte, welche in dem Bereich 1-1 an der zweiten Oberfläche 2-2 des Textilsubstrats 1 verlaufen.

Wie aus Fig. 2A und Fig. 2B entnehmbar ist, weisen im Bereiche 1-1 alle aus dem zweiten Garn 16 bestehenden Schussfäden (S10, S12, S14, S16, S18, S20, S22, S24, S26, S28, S30, S32 und S34) hinsichtlich ihres Verlaufs bezüglich der Oberflächen 2-1 und 2-2 des Textilsubstrats 1 ebenfalls eine Asymmetrie auf: Im Falle jedes aus dem zweiten Garn 16 bestehenden Schussfadens ist die Gesamtlänge aller derjenigen Längsabschnitte, welche in dem Bereich 1-1 an der ersten Oberfläche 2-1 des Textilsubstrats 1 verlaufen, kleiner als die Gesamtlänge aller derjenigen Längsabschnitte, welche in dem Bereich 1-1 an der zweiten Oberfläche 2-2 des Textilsubstrats 1 verlaufen. Wie aus Fig. 2A und Fig. 2B weiterhin entnehmbar ist, weist keiner der aus dem zweiten Garn 16 bestehenden Schussfäden einen Längsabschnitt auf, welcher auf seiner gesamten Länge (d.h. zwischen den Kreuzungspunkten, an denen zwei benachbarte Kettfäden den jeweiligen Schussfaden überkreuzen) ausschliesslich an der ersten Oberfläche 2-1 verläuft (die jeweiligen Längsabschnitte des jeweiligen aus dem zweiten Garn 16 bestehenden Schussfäden verlaufen entweder ausschliesslich an der zweiten Oberfläche 2-2 oder haben zwei Enden, von denen eines an der ersten Oberfläche 2-1 und das andere and zweiten Oberfläche 2-2 liegt).

Die vorstehend genannte Asymmetrie der aus dem ersten Garn 15 bestehenden Fäden und die vorstehend genannte Asymmetrie der aus dem zweiten Garn 16 bestehenden Fäden sind hinsichtlich der ersten Oberfläche 2-1 und der zweiten Oberfläche 2-2 jeweils invers. Dies zeigt sich im vorliegenden Beispiel insbesondere darin, dass die erste Oberfläche 2-1 des Textilsubstrats 1 im Bereich 1-1 zu mindestens 90% von aus dem ersten Garn 15 bestehenden Kettfäden und Schussfäden und zu weniger als 10% von den aus dem zweiten Garn 16 bestehenden Schussfäden gebildet ist (siehe Fig. 2A) und dass die zweite Oberfläche 2-2 des Textilsubstrats 1 im Bereich 1-1 zu etwa 55% von aus dem ersten Garn 15 bestehenden Kettfäden und Schussfäden und zu etwa 45% von den aus dem zweiten Garn 16 bestehenden Schussfäden gebildet ist (siehe Fig. 2B).

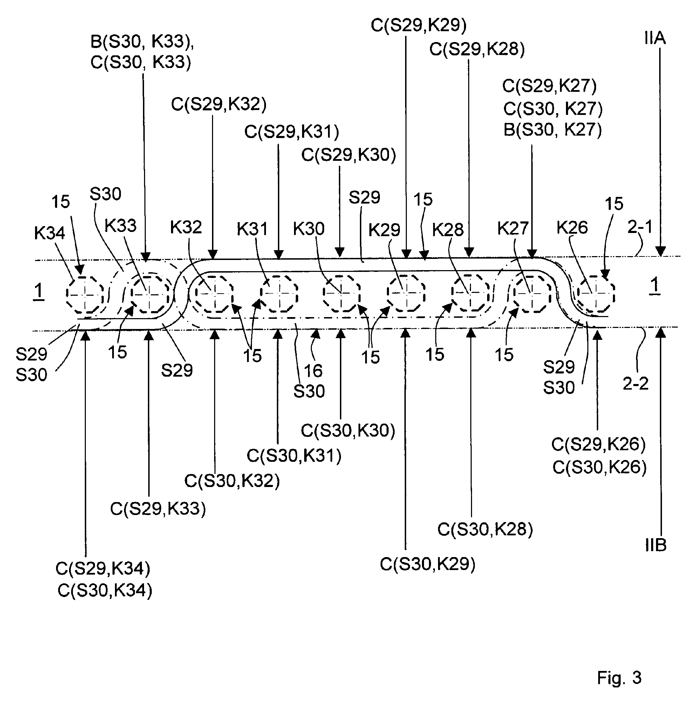

Die vorstehend genannten Asymmetrien sind auch anhand Fig. 3 erkennbar. Fig. 3 zeigt einen Querschnitt durch den Bereich 1-1 des Textilsubstrats 1 entlang der Line III-III in Fig. 2A und 2B; dargestellt ist dabei lediglich der Abschnitt 3 des Bereichs 1-1 des Textilsubstrats 1, welcher in Fig. 2A und Fig. 2B durch das mit dem Bezugszeichen 3 versehene (und mit weissen, gestrichelten Linien gezeichnete) Rechteck begrenzt ist. Die Fig. 3 zeigt insbesondere den Verlauf des aus dem ersten Garn 15 bestehenden Schussfadens S29 (die Konturen dieses Fadens sind in Fig. 3 mit durchgezogenen Linien dargestellt) und den Verlauf des aus dem zweiten Garn 16 bestehenden Schussfadens S30 (die Konturen dieses Fadens in Fig. 3 mit gestrichelten Linien dargestellt) relativ zu 9 verschiedenen Kettfäden K26, K27, K28, K29, K30, K31, K32, K33, K34. Die vorstehend genannten Kettfäden Ki (mit i=26, ...,34) verlaufen in Fig. 3 jeweils senkrecht zur Zeichenebene, wobei in Fig. 3 der Umriss des Querschnitts des jeweiligen Kettfadens Ki als gestrichelte Kreislinie dargestellt ist und im Zentrum der jeweiligen Kreislinie ein aus gestrichelten Linien gebildetes Kreuz gezeichnet ist, welches die zentrale Längsachse des jeweiligen Kettfadens Ki markiert.

In Fig. 3 sind auch die jeweiligen Kreuzungspunkte, an denen die jeweiligen Schussfäden Sj (mit j=29 oder 30) die jeweiligen Kettfäden Ki (mit i=26, ...,34) kreuzen, jeweils durch ein Symbol "C(Sj, Ki)" und einen dem Symbol C(Sj, Ki) zugeordneten Pfeil gekennzeichnet. Dabei identifiziert das Symbol "C(Sj, Ki)" den Kreuzungspunkt, an dem der Schussfaden Sj den Kettfaden Ki kreuzt, und der jeweils zugeordnete Pfeil markiert die Position des jeweiligen Kreuzungspunkts relativ zu dem jeweiligen Schussfaden Sj (in Fig. 3 ist die Position des Kreuzungspunkts C(Sj, Ki) gekennzeichnet: durch die Projektion der zentralen Längsachse des Kettfadens Ki auf die erste Oberfläche 2-1, falls der Schussfaden Sj am Kreuzungspunkt C(Sj, Ki) an der ersten Oberfläche 2-1 verläuft, oder alternativ durch die Projektion der zentralen Längsachse des Kettfadens Ki auf die zweite Oberfläche 2-2, falls der Schussfaden Sj am Kreuzungspunkt C(Sj, Ki) an der zweiten Oberfläche 2-2 verläuft).

Wie Fig. 3 zu entnehmen ist, hat der aus dem ersten Garn 15 bestehende Schussfaden S29 im Abschnitt 3 des Bereichs 1-1 jeweils acht Längsabschnitte, welche sich zwischen jeweils zwei benachbarten Kreuzungspunkten der Kreuzungspunkte C(S29, K26), C(S29, K27), C(S29, K28), C(S29, K29), C(S29, K30), C(S29, K31), C(S29, K32), C(S29, K33) und C(S29, K34) erstrecken. Von diesen acht Längsabschnitten verlaufen insgesamt fünf Längsabschnitte ausschliesslich an der ersten Oberfläche 2-1 (dies trifft auf alle diejenigen Längsabschnitte zu, welche sich zwischen den Kreuzungspunkten C(S29, K27) und C(S29, K32) erstrecken) und ein Längsabschnitt verläuft ausschliesslich an der zweiten Oberfläche 2-2 (dies trifft auf den sich zwischen den Kreuzungspunkten C(S29, K33) und C(S29, K34) erstreckenden Längsabschnitt zu).

Hingegen verlaufen zwei der acht vorstehend genannten Längsabschnitte über einen Teil ihrer Länge an der ersten Oberfläche 2-1 und über einen andern Teil ihrer Länge an der zweiten Oberfläche 2-2: Letzteres trifft auf den sich zwischen den Kreuzungspunkten C(S29, K32) und C(S29, K33) erstreckenden Längsabschnitt und den sich zwischen den Kreuzungspunkten C(S29, K26) und C(S29, K27) erstreckenden Längsabschnitt zu.

Als ein quantitatives Mass für die Asymmetrie, welche den Verlauf des Schussfadens S29 zwischen der ersten Oberfläche 2-1 und der zweiten Oberfläche 2-2 charakterisiert, kann die Differenz Δ(S29) der Gesamtlänge aller Abschnitte des Schussfadens S29, welche an der ersten Oberfläche 2-1 verlaufen, und der Gesamtlänge aller Abschnitte des Schussfadens S29, welche an der zweiten Oberfläche 2-2 verlaufen, betrachtet werden. Zu dieser Differenz Δ(S29) leisten der sich zwischen den Kreuzungspunkten C(S29, K32) und C(S29, K33) erstreckende Längsabschnitt und der sich zwischen den Kreuzungspunkten C(S29, K26) und C(S29, K27) erstreckende Längsabschnitt keinen Beitrag, zumal sich jeder dieser beiden Längsabschnitte zu jeweils gleichen Teilen seiner Länge an der ersten Oberfläche 2-1 und an der zweiten Oberfläche 2-2 erstreckt. Folglich ist die Differenz Δ(S29) identisch zu der Gesamtlänge aller Abschnitte des Schussfadens S29, welche ausschliesslich an der ersten Oberfläche 2-1 verlaufen, und der Gesamtlänge aller Abschnitte des Schussfadens 29, welche ausschliesslich an der zweiten Oberfläche 2-2 verlaufen. Demnach ist die Differenz Δ(S29) im vorliegenden Beispiel - bezogen auf Abschnitt 3 des Bereichs 1-1 des Textilsubstrats 1 - die Differenz der Länge derjenigen fünf Längsabschnitte, welche sich zwischen den Kreuzungspunkten C(S29, K27) und C(S29, K32) erstrecken, und der Länge des einen Längsabschnitts, welcher sich zwischen den Kreuzungspunkten C(S29, K33) und C(S29, K34) erstreckt. Die vorstehend beschriebene Berechnung der Differenz Δ(S29) kann analog für den Verlauf des Schussfadens S29 im Bereich 1-1 durchgeführt werden, mit dem Ergebnis, dass Δ(S29)>0.

Wie Fig. 3 zu entnehmen ist, hat der aus dem zweiten Garn 16 bestehende Schussfaden S30 analog zum Schussfaden 29 im Abschnitt 3 des Bereichs 1-1 ebenfalls acht Längsabschnitte, welche sich zwischen jeweils zwei benachbarten Kreuzungspunkten der Kreuzungspunkte C(S30, K26), C(S30, K27), C(S30, K28), C(S30, K29), C(S30, K30), C(S30, K31), C(S30, K32), C(S30, K33) und C(S30, K34) erstrecken. Von diesen acht Längsabschnitten verlaufen insgesamt vier Längsabschnitte ausschliesslich an der zweiten Oberfläche 2-2 (dies trifft auf alle diejenigen Längsabschnitte zu, welche sich zwischen den Kreuzungspunkten C(S30, K28) und C(S30, K32) erstrecken), während kein Längsabschnitt ausschliesslich an der ersten Oberfläche 2-1 verläuft.

Hingegen verlaufen vier der acht vorstehend genannten Längsabschnitte über einen Teil ihrer Länge an der ersten Oberfläche 2-1 und über einen anderen Teil ihrer Länge an der zweiten Oberfläche 2-2: Letzteres trifft auf den sich zwischen den Kreuzungspunkten C(S30, K26) und C(S30, K27) erstreckenden Längsabschnitt, den sich zwischen den Kreuzungspunkten C(S30, K27) und C(S30, K28) erstreckenden Längsabschnitt, den sich zwischen den Kreuzungspunkten C(S30, K32) und C(S30, K33) erstreckenden Längsabschnitt und den sich zwischen den Kreuzungspunkten C(530, K33) und C(S30, K34) erstreckenden Längsabschnitt zu.

Als ein quantitatives Mass für die Asymmetrie, welche den Verlauf des Schussfadens S30 zwischen der ersten Oberfläche 2-1 und der zweiten Oberfläche 2-2 charakterisiert, kann die Differenz Δ(S30) der Gesamtlänge aller Abschnitte des Schussfadens S30, welche an der ersten Oberfläche 2-1 verlaufen, und der Gesamtlänge aller Abschnitte des Schussfadens S30, welche an der zweiten Oberfläche 2-2 verlaufen, betrachtet werden. Zu dieser Differenz Δ(S30) leisten die vier Längsabschnitte, welche sich zwischen den Kreuzungspunkten C(S30, K26) und C(S30, K27) bzw. zwischen den Kreuzungspunkten C(S30, K27) und C(S30, K28) bzw. zwischen den Kreuzungspunkten C(S30, K32) und C(S30, K33) bzw. zwischen den Kreuzungspunkten C(S30, K33) und C(S30, K34) erstrecken, keinen Beitrag, zumal sich jeder dieser Längsabschnitte zu jeweils gleichen Teilen seiner Länge an der ersten Oberfläche 2-1 und an der zweiten Oberfläche 2-2 erstreckt. Folglich ist die Differenz Δ(S30) identisch zu der Gesamtlänge aller Abschnitte des Schussfadens S30, welche ausschliesslich an der ersten Oberfläche 2-1 verlaufen, und der Gesamtlänge aller Abschnitte des Schussfadens S30, welche ausschliesslich an der zweiten Oberfläche 2-2 verlaufen. Demnach ist die Differenz Δ(S30) im vorliegenden Beispiel - bezogen auf Abschnitt 3 des Bereichs 1-1 des Textilsubstrats 1 - der negative Wert der Länge derjenigen vier Längsabschnitte, welche sich zwischen den Kreuzungspunkten C(S30, K28) und C(S30, K32) erstrecken. Die vorstehend beschriebene Berechnung der Differenz Δ(S30) kann analog für den Verlauf des Schussfadens S30 im Bereich 1-1 durchgeführt werden, mit dem Ergebnis, dass Δ(S30)<0.

Wie aus Fig. 3 weiterhin entnehmbar ist, weist der Schussfaden S30 sowohl am Kettfaden K27 als auch am Kettfaden K33 je einen Bindungspunkt auf. Diese Bindungspunkte sind in Fig. 3 mit den Symbolen B(S30, K27) bzw. B(S30, K33) bezeichnet und haben dieselbe Position wie die Kreuzungspunkte C(S30, K27) bzw. C(S30, K33). Wie Fig. 2A und 2B entnehmbar ist, weist der Schussfaden S30 noch weitere Bindungspunkte auf. Entsprechend weisen auch alle anderen der aus dem zweiten Garn 16 bestehenden Schussfäden im Bereich 1-1 mehrere Bindungspunkte auf.

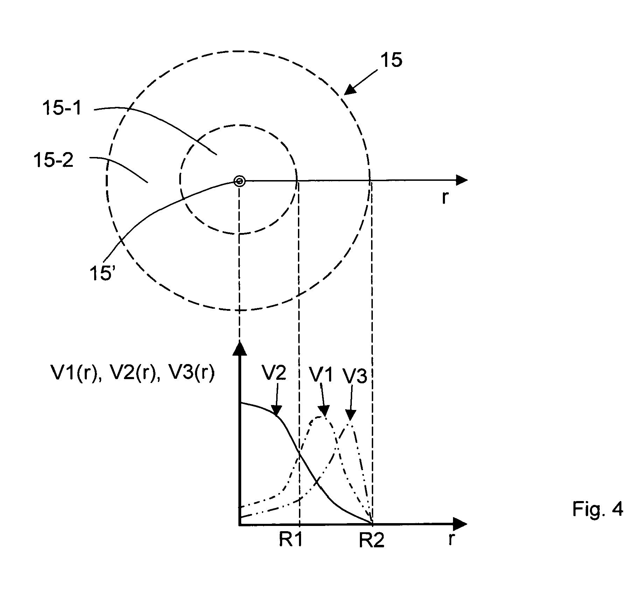

Anhand der Fig. 4 wird im Folgenden der Aufbau einer bevorzugten Ausführungsform eines ersten Garns 15 erläutert. Fig. 4 stellt einen Querschnitt des ersten Garns 15 und die räumliche Verteilung der jeweiligen in diesem Garn enthaltenen ersten Fasern (aus Wolle), zweiten Fasern (aus Celluloseregenerat) und dritten Fasern (Endlosfaser aus einem synthetischen Werkstoff) dar. Das erste Garn 15 weist eine sich in der Längsrichtung des Garns 15 erstreckende zentrale Längsachse 15' auf, wobei eine äussere Kontur des Querschnitts in Fig. 4 durch eine gestrichelte Kreislinie dargestellt ist, welche mit einem Radius R2 um die zentrale Längsachse 15' geführt ist. Wie Fig. 4 andeutet, umfasst das erste Garn 15 eine die zentrale Längsachse 15' umgebende und sich entlang der zentralen Längsachse 15' erstreckende Kernzone 15-1 und eine die Kernzone 15-1 umgebende, sich entlang der zentralen Längsachse 15' erstreckende Mantelzone 15-2. Die äussere Kontur der Kernzone 15-2 ist in Fig. 4 als gestrichelte Kreislinie mit einem Radius R1 um die zentrale Längsachse 15' dargestellt. Fig. 4 zeigt weiterhin - in einer schematischen Darstellung jeweils als Funktion des radialen Abstands r von der zentralen Längsachse 15' - die Konzentration V1(r) der ersten Fasern, die Konzentration V2(r) der zweiten Fasern und die Konzentration V3(r) der dritten Fasern.

Gemäss Fig. 4 sind die jeweiligen ersten Fasern, die jeweiligen zweiten Fasern und die jeweiligen dritten Fasern über den Querschnitt des ersten Garns derart räumlich verteilt, dass
- die Konzentration V2(r) der zweiten Fasern in der Kernzone 15-1 grösser ist als in der Mantelzone 15-2 und
- die Konzentration V1(r) der ersten Fasern in der Mantelzone 15-2 grösser ist als in der Kernzone 15-1 und
- die Konzentration V3(r) der dritten Fasern in der Mantelzone 15-2 grösser ist als in der Kernzone 15-1.

Dabei ist die Konzentration V2(r) der zweiten Fasern (Celluloseregenerat) in der Mitte der Kernzone 15-1 am grössten, während die Konzentration V3(r) der dritten Fasern (Endlosfaser aus einem synthetischen Werkstoff) in der Nähe der äusseren Kontur der Mantelzone 15-2 am grössten ist. Das erste Garn 15 gemäss Fig. 4 hat die Eigenschaft, dass Wasser hauptsächlich in der Kernzone 15-1 absorbiert werden kann, während die Mantelzone 15-2 in der Regel rasch trocknet. Das erste Garn 15 mit den in Fig. 4 angegebenen räumlichen Verteilungen der jeweiligen Fasern kann beispielsweise dadurch realisiert werden, dass Fasern aus Wolle mit Stapelfasern aus Celluloseregenerat bei gleichzeitiger Einarbeitung eines texturierten, endlosen Polymergarns innig versponnen werden. Die Stapelfasern aus Celluloseregenerat können dabei in etwa dieselbe Länge wie die Fasern aus Wolle haben. Beim Verspinnen der jeweiligen Fasern können die unterschiedlichen Beschaffenheiten der Oberflächen der Fasern berücksichtigt werden. Die Stapelfasern aus Celluloseregenerat haben in der Regel eine glattere Oberfläche und sind weniger gekräuselt als die Wollfasern und als die in der Regel wirr angeordneten Fasern des texturierten Polymergarns. Beim Verspinnen kann erreicht werden, dass die Fasern aus Celluloseregenerat sich tendenziell vermehrt in der Mitte des Garns liegen, während sich die wirr angeordneten Fasern des texturierten Polymergarns und die Fasern aus Wolle sich tendenziell vermehrt in der Mantelzone 15-2 des ersten Garns 15 anordnen. Mehrere einfache Garne der vorstehend genannten Art können auch zu Zwirnen verdreht werden.

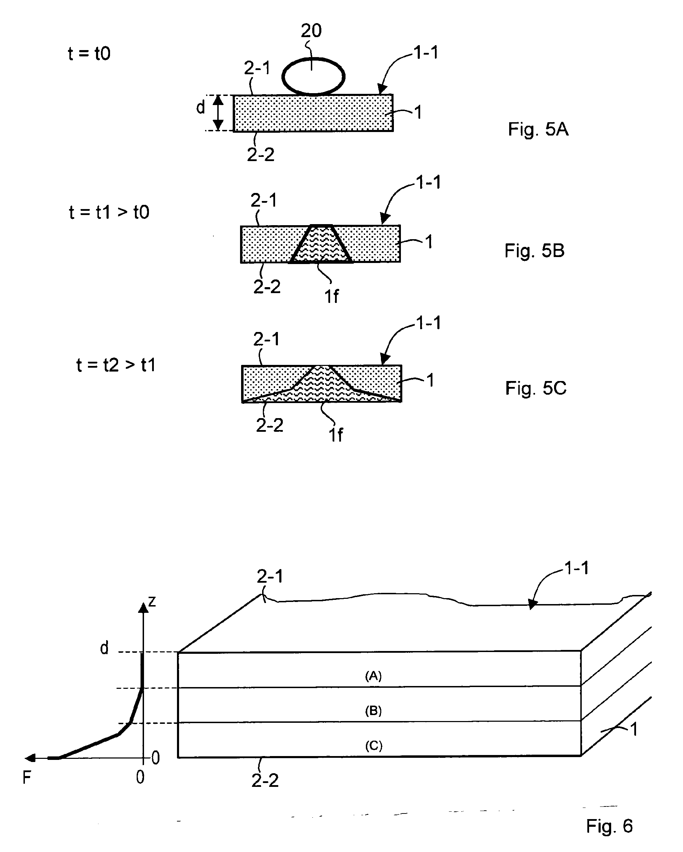

Fig. 5A-5C und Fig. 6 stellen Reaktionen eines Textilsubstrats 1 gemäss Fig. 1-3 auf Feuchtigkeit in Form von (flüssigem) Wasser und Wasserdampf dar. Die in Fig. 5A-5C und Fig. 6 dargestellten Reaktionen wurden experimentell ermittelt anhand eines Textilsubstrats 1, bei welchem das erste Garn 15 aus 40 Gewichtsprozent Wolle, 35 Gewichtsprozent Celluloseregenerat in Form von Viskose und 15 Gewichtsprozent Polyamid (in Form eines texturierten, endlosen Polyamid-Garns) bestand und das zweite Garn 16 aus 100 Gewichtsprozent Celluloseregenerat in Form von Viskose bestand. Die aus dem ersten Garn 15 bestehenden Kett- und Schussfäden waren dabei als ein Zwirn realisiert, welcher aus mehreren, jeweils als Einfachgarn vorliegenden ersten Garnen 15 gedreht wurde. Das jeweilige erste Garn 15 war dabei derart realisiert, dass - wie in Fig. 4 angedeutet - die Konzentration der jeweiligen Fasern aus Celluloseregenerat (Viskose) in einer Kernzone (15-1 in Fig. 4) des ersten Garns 15 am grössten ist und die Konzentration der jeweiligen Fasern aus Wolle und Polyamid in einer Mantelzone (15-2 in Fig. 4) des ersten Garns 15 am grössten ist. Die für die Herstellung des ersten Garns 15 verwendeten Celluloseregenerat Fasern lagen als Stapelfasern vor, deren Faserlänge in etwa der Faserlänge der im ersten Garn vorhandenen Fasern aus Wolle entspricht. Die aus dem ersten Garn 15 bestehenden Kett- und Schussfäden wurden jeweils als Mischgarn Nm 36/2 realisiert. Fäden dieser Art können bei kommerziellen Kammgarnspinnereien unter dem Oberbegriff "Covergarn" geordert werden, z.B. bei zur "Wagenfelder Spinning Group" gehörenden Unternehmungen (Wagenfelder Spinnereien GmbH, D-49419 Wagenfeld, Deutschland). Die aus dem zweiten Garn 16 bestehenden Schussfäden wurden als standardisiertes Stapelgarn Nm 18 realisiert.

Die Fig. 5A-5C stellen die Reaktion eines Textilsubstrats 1 der vorstehend genannten Art auf Wasser, welches im flüssigen Zustand im Bereich 1-1 auf die erste Oberfläche 2-1 des Textilsubstrats 1 trifft, als Funktion der Zeit t dar. Dabei zeigt Fig. 5A - als einen Ausgangpunkt zu einem Zeitpunkt t=t0 - einen Wassertropfen 20, welcher mit der Oberfläche 2-1 des Textilsubstrats 1 in Kontakt gebracht ist, wobei das Textilsubstrat 1 in einem Querschnitt dargestellt ist. Wie Fig. 5B andeutet, dringt das in dem Wassertropfen enthaltene Wasser zunächst durch die Oberfläche 2-1 in das Textilsubstrat 1 ein und wird dabei im Wesentlichen senkrecht zu den Oberflächen 2-1 und 2-2 transportiert, sodass das Wasser zu einem Zeitpunkt t1 > t0 die Oberfläche 2-2 erreicht, ohne sich unmittelbar an der ersten Oberfläche 2-1 parallel zur ersten Oberfläche 2-1 auszubreiten: In Fig. 5B gibt die mit 1f bezeichnete Fläche den Bereich des Querschnitts des Textilsubstrats 1 an, in welchem sich das Wasser bis zum Zeitpunkt t1 verteilt hat. Wenn die Zeit weiter voranschreitet bis zu einem Zeitpunkt t2 > t1, dann findet ein Transport des Wassers im Wesentlichen an der zweiten Oberfläche 2-2 statt, wobei sich das Wasser schnell zweidimensional entlang der zweiten Oberfläche 2-2 verteilt, während unmittelbar an der ersten Oberfläche 2-1 weiterhin keine nennenswerte Ausbreitung des Wassers parallel zur ersten Oberfläche 2-1 stattfindet (die mit 1f bezeichnete Fläche in Fig. 5C gibt den Bereich des Querschnitts des Textilsubstrats an, in welchem sich das Wasser bis zum Zeitpunkt t2 verteilt hat). Der in den Fig. 5A-5C dargestellte Transport des Wassers innerhalb des Textilsubstrats 1 wird wesentlich durch die schnelle Absorption von Wasser in den aus dem zweiten Garn 16 bestehenden (Celluloseregenerat-Fasern enthaltenden) Schussfäden und die räumliche Anordnung dieser Schussfäden innerhalb des Textilsubstrats 1 getrieben. Der in Fig. 5C dargestellte Zustand stellt sich dabei bereits nach wenigen Sekunden ein, wobei sich die erste Oberfläche 2-1 bereits nach wenigen Sekunden trocken anfühlt, während sich das Wasser an der zweiten Oberfläche 2-2 sichtbar und fühlbar konzentriert und ausbreitet. Daran ist erkennbar, dass sich das Wasser - ausgehend von der ersten Oberfläche 2-1 - nicht symmetrisch bezüglich der beiden Oberflächen 2-1 und 2-2 im Textilsubstrat 1 verteilt und die Verteilung des Wassers innerhalb des Bereichs 1f des Textilsubstrats 1 insbesondere einen Gradienten aufweist, welcher von der ersten Oberfläche 2-1 zur zweiten Oberfläche 2-2 gerichtet ist und in Richtung auf die zweite Oberfläche 2-2 nichtlinear als Funktion des Abstands von der ersten Oberfläche 2-1 grösser wird.

Fig. 6 stellt die Reaktion eines Textilsubstrats 1 der vorstehend genannten Art auf eine Wasserdampf enthaltende Atmosphäre dar, welche im gesamten Bereich 1-1 an die erste Oberfläche 2-1 des Textilsubstrats 1 grenzt. In diesem Fall kann Wasserdampf durch die erste Oberfläche 2-1 in das Textilsubstrat 1 eindringen und sich innerhalb des Textilsubstrats 1 ausbreiten. Mittels Computertomographie wurde die Verteilung von Feuchtigkeit (kondensiertes Wasser und gegebenenfalls Wasserdampf) innerhalb des Bereichs 1 des Textilsubstrats 1 für verschiedene Zeitpunkte als Funktion des Ortes gemessen.

Fig. 6 zeigt eine schematische Darstellung eines Querschnitts des Textilsubstrats 1 in Kombination mit einem Diagramm, welches schematisch die an einem bestimmten Zeitpunkt gemessene, im Textilsubstrat vorhandene Feuchtigkeit F als Funktion des Abstands z von der zweiten Oberfläche 2-2 darstellt. Wie der gemessene Verlauf F(z) der Feuchtigkeit andeutet, verteilt sich die Feuchtigkeit als Funktion des Abstands z innerhalb des Textilsubstrats 1 zwischen der ersten Oberfläche 2-1 und der zweiten Oberfläche 2-2 im Wesentlichen in drei "Schichten", welche jeweils senkrecht bezüglich der zweiten Oberfläche 2-2 übereinanderliegend angeordnet sind und sich jeweils parallel zu der ersten Oberfläche 2-1 bzw. zu der zweiten Oberfläche 2-2 erstrecken. Diese drei Schichten sind in Fig. 6 schematisch als Schichten (A), (B) und (C) dargestellt, welche in die Darstellung des Textilsubstrats 1 eingezeichnet sind, und sind insbesondere dadurch charakterisiert, dass sie hinsichtlich der Verteilung der Feuchtigkeit charakteristische Unterschiede zeigen, sodass sich die Feuchtigkeit asymmetrisch über die Schichten (A), (B) und (C) verteilt. Wie der gemessene Verlauf F(z) der Feuchtigkeit gemäss Fig. 6 andeutet, zeichnet sich die an die erste Oberfläche 2-1 angrenzende Schicht (A) dadurch aus, dass sie keine messbare Feuchtigkeit enthält, sodass sie als trocken angesehen werden kann. Die mittlere (an die Schichten (A) und (C) grenzende) Schicht (B) weist eine Feuchtigkeit auf, welche als Funktion des Abstands z in Richtung auf die Oberfläche 2-1 linear abnimmt und dementsprechend einen Gradienten aufweist, welcher auf die zweite Oberfläche 2-2 gerichtet ist und innerhalb der Schicht (B) konstant ist. In der an die zweite Oberfläche 2-2 grenzenden Schicht (C) steigt die Feuchtigkeit als Funktion des Abstandes z in Richtung auf die Oberfläche 2-2 stark nichtlinear an. Die Feuchtigkeit F(z) weist dementsprechend innerhalb der Schicht (C) einen Gradienten auf, welcher auf die zweite Oberfläche 2-2 gerichtet ist und innerhalb der Schicht (C) in Richtung auf die Oberfläche 2-2 grösser wird.

Dabei beträgt im vorliegenden Beispiel die Feuchtigkeit in der Schicht (A) in etwa 0%, in der Schicht (B) in etwa 2-4% (gemittelt über die Schicht (B)) und in der Schicht (C) in etwa 8-12% (gemittelt über die Schicht (C)). Dabei zeigt sich, dass das erfindungsgemässe Textilsubstrat 1 aufgrund seiner Konstruktion diese asymmetrische Verteilung der Feuchtigkeit konstant halten kann. Die Schicht (C) kann bis zur Sättigungsgrenze Feuchtigkeit aufnehmen, wobei eine Konzentration der Feuchtigkeit in der Schicht (C) bis zur Sättigungsgrenze erfolgt, während die Schicht (A) konstant trocken bleibt. Um diese asymmetrische Verteilung der Feuchtigkeit beliebig lange aufrecht erhalten zu können, ist es möglich, Feuchtigkeit durch die Oberflächen 2-2 aus der Schicht (C) abzutransportieren. Die in der Schicht (B) enthaltene Feuchtigkeit gewährleistet eine kontrollierte Verdunstung von Feuchtigkeit über die erste Oberfläche 2-1 und ermöglicht eine dosierte Kühlung des Textilsubstrats 1 im Bereich der ersten Oberfläche 2-1.

Diese Schichtung der Feuchtigkeit resultiert u.a. aus der Tatsache, dass die im Textilsubstrat 1 vorhandenen Fasern aus Celluloseregenerat (im Vergleich zu den anderen im Textilsubstrat vorhandenen Fasern) eine extrem hohe Absorptionsrate für Wasser haben und ausserdem an der ersten Oberfläche 2-1 in einer geringeren Konzentration vorhanden sind als an der zweiten Oberfläche 2-2. Ausserdem sind an der ersten Oberfläche 2-1 im Bereich der Schicht (A) Fasern aus Polyamid und Wolle in einer relativ hohen Konzentration vorhanden, was eine relativ schnelle Trocknung des Textilsubstrats 1 innerhalb der Schicht (A) fördert. Damit die vorstehend genannte Schichtung der Feuchtigkeit konstant gehalten werden kann, ist es relevant, dass Feuchtigkeit auf effiziente Weise zwischen den verschiedenen im Textilsubstrat 1 vorhandenen Fasern ausgetauscht werden kann. Damit dieser Austausch von Feuchtigkeit effizient vonstatten geht, sind ein geringer Wasserdampfdurchgangswiderstand Rₑₜ und ein relativ geringer Wärmedurchgangswiderstand R_{ct} förderlich.

Das in den Fig. 1-6 dargestellte Textilsubstrat wurde beispielsweise mit einer Kettfadendichte von 36 Kettfäden pro cm und einer Schussfadendichte von 16 Schussfäden pro cm realisiert. Daraus resultierte ein Wasserdampfdurchgangswiderstand mit einem Rₑₜ-Wert < 6 m²Pa/W (dies entspricht der Definition "extrem atmungsaktiv" bezüglich Textilsubstraten) und ein Wärmedurchgangswiderstand R_{ct} < 19 10⁻³ m²K/W.

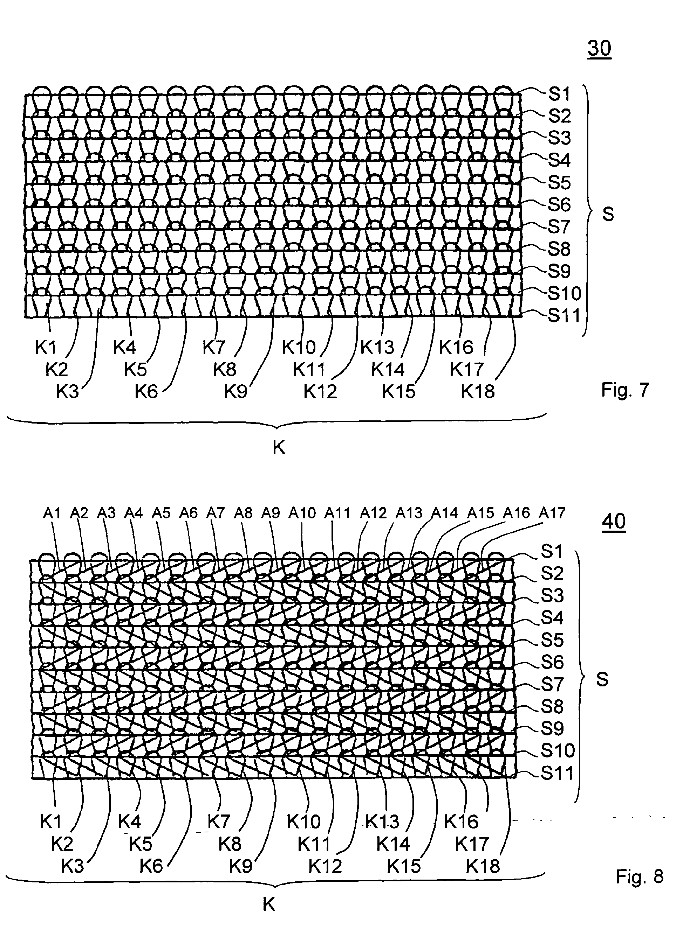

Das in den Fig. 1-6 dargestellte Textilsubstrat kann im Rahmen der Erfindung auf vielfältige Weisen modifiziert werden. Beispielweise kann die Zusammensetzung der jeweiligen Kett- und Schussfäden, die Anordnung der jeweiligen Fasern in den Kett- und Schussfäden und die Anordnung der jeweiligen Kett- und Schussfäden im Textilsubstrat variiert werden. Weiterhin kann ein erfindungsgemässes Textilsubstrat - anstatt als Gewebe gemäss dem in den Fig. 1-6 dargestellten Beispiel - auch in anderer Form realisiert werden, beispielsweise in Form eines Malimo (Fig. 7) oder in Form eines (Schuss-) Raschel (Fig. 8).

Fig. 7 zeigt eine Draufsicht auf ein Textilsubstrat 30 in Form eines aus einer Kette K und einem Schuss S gebildeten Malimo. Die Kette K des Textilsubstrats 30 umfasst eine Mehrzahl von Kettfäden Ki (i=1, ...,18), welche jeweils mehrere in einer Ebene angeordnete Maschen bilden. Der Schuss S umfasst mehrere Schussfäden Sj (j=1, ...,11), welche jeweils jeden der Kettfäden an jeweils einem Kreuzungspunkt kreuzen, sodass die Kette und der Schuss jeweils eine Schicht bilden.

Die Kettfäden bzw. Schussfäden des Textilsubstrats 30 können - analog zu den Kettfäden bzw. Schussfäden des Textilsubstrats 1 - aus dem ersten Garn 15 bzw. dem zweiten Garn 16 bestehen und - analog zu den jeweiligen aus dem ersten Garn 15 bestehenden Kett- oder Schussfäden und den aus dem zweiten Garn 16 bestehenden Schussfäden des Textilsubstrats 1 - asymmetrisch bezüglich der jeweiligen Oberflächen des Textilsubstrats 30 angeordnet sein. Das Textilsubstrat 30 zeigt dann bezüglich eines Transports von Feuchtigkeit ein Verhalten, welches dem Verhalten des Textilsubstrats 1 entspricht.

Entsprechend zeigt Fig. 8 eine Draufsicht auf ein Textilsubstrat 40 in Form eines aus einer Kette K und einem Schuss S gebildeten Raschel. Die Kette K umfasst in diesem Beispiel zwei verschiedene Fadensysteme: eine Mehrzahl von Kettfäden Ki (i=1, ...,18), welche jeweils mehrere in einer Ebene angeordnete Maschen bilden, und eine Mehrzahl von Kettfäden Ak (k=1, ...,17), von denen jeder einzelne im Zickzack zwischen jeweils zwei benachbarten Kettfäden Ki und Ki(i+1) verlaufen. Der Schuss S umfasst mehrere Schussfäden Sj (j=1, ...,11), welche jeweils jeden der Kettfäden Ki und Ak an jeweils einem Kreuzungspunkt kreuzen, sodass die Kette K und der Schuss S jeweils eine Schicht bilden. Auch die Kettfäden bzw. Schussfäden des Textilsubstrats 40 können - analog zu den Kettfäden bzw. Schussfäden des Textilsubstrats 1 - aus dem ersten Garn 15 bzw. dem zweiten Garn 16 bestehen und - analog zu den jeweiligen aus dem ersten Garn 15 bestehenden Kett- oder Schussfäden und den aus dem zweiten Garn 16 bestehenden Schussfäden des Textilsubstrats 1 - asymmetrisch bezüglich der jeweiligen Oberflächen des Textilsubstrats 40 angeordnet sein. Das Textilsubstrat 40 zeigt dann bezüglich eines Transports von Feuchtigkeit ebenfalls ein Verhalten, welches dem Verhalten des Textilsubstrats 1 entspricht.

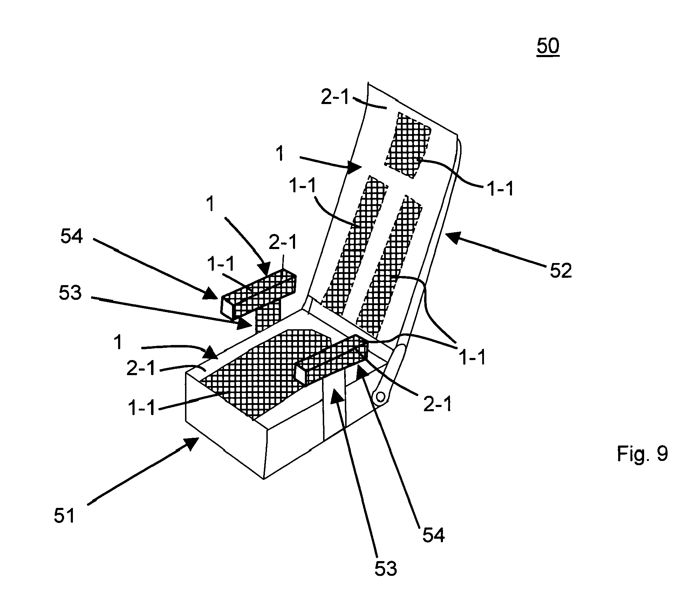

Fig. 9 zeigt eine Verwendung eines erfindungsgemässen Textilsubstrats 1 als Bezugsstoff für eine Sitzeinrichtung 50. Die Sitzeinrichtung 50 umfasst einen Sitz 51, eine Rückenlehne 52, zwei Seitenteile 53 und zwei jeweils an einem der Seitenteile 53 befestigte Armlehnen 54. Wie Fig. 9 andeutet, sind der Sitz 51, die Rückenlehne 52, jedes der beiden Seitenteile 53 und jede der beiden Armlehnen 54 derart mit einem Textilsubstrat 1 gemäss Fig. 1-3 bezogen, dass die erste Oberfläche 2-1 des jeweiligen Textilsubstrats 1 jeweils eine äussere Oberfläche des Sitzes 51, der Rückenlehne 52, jedes der beiden Seitenteile 53 und jeder der beiden Armlehnen 54 bildet und somit als rechte Warenseite des jeweiligen Textilsubstrats 1 dient, während die zweite Oberfläche 2-2 des jeweiligen Textilsubstrats 1 jeweils als linke Warenseite dient. In Fig. 9 kennzeichnen die karierten Flächen jeweils die Bereiche 1-1 der Oberfläche der Sitzeinrichtung 50, an welchen gewöhnlich eine auf der Sitzeinrichtung 50 sitzende Person während langer Sitzphasen Feuchtigkeit (Wasser und Wasserdampf) an die jeweiligen Textilsubstrate 1 abgibt. Um ein klimatisiertes Sitzen zu gewährleisten, sind zumindest diejenigen Bereiche 1-1 der jeweiligen Textilsubstrate 1 gemäss Fig. 9 wie der in den Fig. 2A und 2B dargestellte Bereich 1-1 des Textilsubstrats 1 gemäss Fig. 1-3 ausgebildet. Alternativ kann natürlich auch jedes Textilsubstrat 1 gemäss Fig. 9 über seine gesamte Oberfläche wie der in den Fig. 2A und 2B dargestellte Bereich 1-1 des Textilsubstrats 1 gemäss Fig. 1-3 ausgebildet sein. Die Sitzeinrichtung 51 kann so ausgebildet sein, dass Wasser von der linken Warenseite der jeweiligen Textilsubstrate 1 in das Innere der Sitzeinrichtung 51 abgeleitet werden kann. Auf diese Weise ist gewährleistet, dass die erste Oberfläche 2-1 der jeweiligen Textilsubstrate 1 auch nach langen Sitzphasen stets trocken bleibt und die erste Oberfläche 2-1 eine Temperatur in der Nähe der Körpertemperatur der sitzenden Person annimmt.

## Patentansprüche

1. Textilsubstrat (1, 30, 40) aus Kette (K) und Schuss (S), welches wasserableitend und wasserdampfableitend ist und Wolle und zumindest Celluloseregenerat-Fasern umfasst,
wobei die Kette (K) eine Mehrzahl von Kettfäden (K1, K2, K10, K29) und der Schuss (S) eine Mehrzahl von Schussfäden (S1, S2, S10, S30) umfasst,
wobei jeder Kettfaden mehrere Schussfäden jeweils an mindestens einem Kreuzungspunkt überkreuzt und jeder Schussfaden (S30) mehrere Kettfäden (K30, K31) jeweils an mindestens einem Kreuzungspunkt (C(S30, K30), C(S30, K31)) überkreuzt, sodass die Kette und der Schuss gemeinsam eine Schicht bilden, welche auf einer Seite eine erste Oberfläche (2-1) und auf einer anderen Seite eine der ersten Oberfläche gegenüberliegende zweite Oberfläche (2-2) aufweist,
wobei mindestens einer der Kettfäden (K10) oder mindestens einer der Schussfäden (S29) aus einem ersten Garn (15) besteht und mindestens einer der Kettfäden oder mindestens einer der Schussfäden (S30) aus einem zweiten Garn (16) besteht,
**dadurch gekennzeichnet, dass**
das erste Garn (15) ein Dreikomponentengarn ist, welches mindestens eine erste Faser aus Wolle, mindestens eine zweite Faser aus Celluloseregenerat und mindestens eine dritte Faser in Form einer Endlosfaser aus einem synthetischen Werkstoff umfasst, und
das zweite Garn (16) eine vorgegebene Menge Celluloseregenerat-Fasern enthält, wobei der prozentuale Anteil der Masse der jeweils im zweiten Garn enthaltenen Celluloseregenerat-Fasern an der jeweiligen Gesamtmasse des zweiten Garns grösser ist als der prozentuale Anteil der Masse der jeweils im ersten Garn enthaltenen zweiten Fasern aus Celluloseregenerat an der jeweiligen Gesamtmasse des ersten Garns,
wobei die Schicht zumindest einen Bereich (1-1) umfasst, in welchem der mindestens eine aus dem ersten Garn (15) bestehende Kettfaden oder Schussfaden (S29) und der mindestens eine aus dem zweiten Garn (16) bestehende Kettfaden oder Schussfaden (S30) derart verlaufen, dass
(i) der mindestens eine aus dem ersten Garn (15) bestehende Kettfaden oder Schussfaden (S29) einen oder mehrere Längsabschnitte, welche sich jeweils zwischen zwei benachbarten Kreuzungspunkten (C(S29, K27), C(S29, K28), C(S29, K29), C(S29, K30), C(S29, K31), C(S29, K32)) erstrecken und an der ersten Oberfläche (2-1) der Schicht verlaufen, und einen oder mehrere Längsabschnitte, welche sich jeweils zwischen zwei benachbarten Kreuzungspunkten (C(S29, K26), C(S29, K27), C(S29, K32), C(S29, K33) und C(S29, K34))erstrecken und zumindest über einen Teil ihrer Länge an der zweiten Oberfläche (2-2) der Schicht verlaufen, aufweist und
(ii) der mindestens eine aus dem zweiten Garn (16) bestehende Kettfaden oder Schussfaden (S30) einen oder mehrere Längsabschnitte, welche sich jeweils zwischen zwei benachbarten Kreuzungspunkten (C(S30, K26), C(S30, K27), C(S30, K28), C(S30, K32), C(S30, K33) und C(S30, K34)) erstrecken und zumindest über einen Teil ihrer Länge an der ersten Oberfläche (2-1) der Schicht verlaufen, und einen oder mehrere Längsabschnitte, welche sich jeweils zwischen zwei benachbarten Kreuzungspunkten (C(S30, K28), C(S30, K29), C(S30, K30), C(S30, K31), C(S30, K32)) erstrecken und an der zweiten Oberfläche (2-2) der Schicht verlaufen, aufweist, und
(iii) im Falle des mindestens einen aus dem ersten Garn (15) bestehenden Kettfadens oder Schussfadens (S29) die Gesamtlänge aller derjenigen Längsabschnitte, welche in dem zumindest einen Bereich (1-1) der Schicht an der ersten Oberfläche (2-1) der Schicht verlaufen, grösser als die Gesamtlänge aller derjenigen Längsabschnitte ist, welche in dem zumindest einen Bereich (1-1) der Schicht an der zweiten Oberfläche (2-2) der Schicht verlaufen, und
(iv) im Falle des mindestens einen aus dem zweiten Garn (16) bestehenden Kettfadens oder Schussfadens (S30) die Gesamtlänge aller derjenigen Längsabschnitte, welche in dem zumindest einen Bereich (1-1) der Schicht an der ersten Oberfläche (2-1) der Schicht verlaufen, kleiner als die Gesamtlänge aller derjenigen Längsabschnitte ist, welche in dem zumindest einen Bereich (1-1) der Schicht an der zweiten Oberfläche (2-2) der Schicht verlaufen.

2. Textilsubstrat (1, 30, 40) nach Anspruch 1, wobei
das erste Garn (15) eine zentrale Längsachse (15') aufweist und eine die zentrale Längsachse (15') umgebende und sich entlang der zentralen Längsachse erstreckende Kernzone (15-1) und eine die Kernzone umgebende, sich entlang der zentralen Längsachse (15') erstreckende Mantelzone (15-2) umfasst und
die jeweiligen ersten Fasern, die jeweiligen zweiten Fasern und die jeweiligen dritten Fasern im ersten Garn derart räumlich verteilt (V1(r), V2(r), V3(r)) angeordnet sind, dass
eine Konzentration (V1(r)) der zweiten Fasern in der Kernzone (15-1) grösser ist als in der Mantelzone (15-2) und
eine Konzentration (V2(r)) der ersten Fasern in der Mantelzone (15-2) grösser ist als in der Kernzone (15-1) und
eine Konzentration (V3(r)) der dritten Fasern in der Mantelzone (15-2) grösser ist als in der Kernzone (15-1).

3. Textilsubstrat (1, 30, 40) nach einem der Ansprüche 1-2, wobei
die zweite Faser im ersten Garn (15) als Stapelfaser ausgebildet ist.

4. Textilsubstrat (1, 30, 40) nach einem der Ansprüche 1-3, wobei
die jeweilige dritte Faser des ersten Garns (15) ein Polymer oder ein Gemisch aus verschiedenen Polymeren umfasst.

5. Textilsubstrat (1, 30, 40) nach einem der Ansprüche 1-4, wobei
die jeweilige dritte Faser eines oder mehrere der Polymere Polyamid, Polyester oder Polyolefin umfasst.

6. Textilsubstrat (1, 30, 40) nach einem der Ansprüche 1-5, wobei
der Gewichtsanteil der jeweiligen ersten Fasern und der jeweiligen zweiten Fasern am Gesamtgewicht des ersten Garns (15) grösser ist als der Gewichtsanteil der jeweiligen dritten Fasern am Gesamtgewicht des ersten Garns (15).

7. Textilsubstrat (1, 30, 40) nach Anspruch 1-6, wobei das erste Garn (15)
die jeweiligen ersten Fasern mit einem Anteil von 25-55 Gewichtsprozent,
die jeweiligen zweiten Fasern mit einem Anteil von 25-55 Gewichtsprozent und
die jeweiligen dritten Fasern mit einem Anteil von 5-40 Gewichtsprozent umfasst.

8. Textilsubstrat (1, 30, 40) nach einem der Ansprüche 1-7, wobei
das zweite Garn (16) 50-100 Gewichtsprozent Celluloseregenerat-Fasern umfasst.

9. Textilsubstrat (1, 30, 40) nach einem der Ansprüche 1-8, wobei
jede einzelne der jeweiligen zweiten Fasern des ersten Garns (15) und/oder jede einzelne der jeweiligen Celluloseregenerat-Fasern des zweiten Garns (16) aus einem der Materialien Viskose (CV), Modal (CMD) oder Lyocell (CLY) besteht.

10. Textilsubstrat (1, 30, 40) nach einem der Ansprüche 1-9, wobei
der mindestens eine aus dem ersten Garn (15) bestehende Kettfaden (K10) oder Schussfaden (S29) ein Einfachgarn oder ein aus mehreren Einfachgarnen gebildeter Zwirn ist und/oder
der mindestens eine aus dem zweiten Garn (16) bestehende Kettfaden oder Schussfaden (S30) ein Einfachgarn oder ein aus mehreren Einfachgarnen gebildeter Zwirn ist.

11. Textilsubstrat (1) nach einem der Ansprüche 1-10, wobei mehrere Kettfäden (K26, K27, K28, K32, K33, K34) und/oder mehrere Schussfäden aus dem ersten Garn (15) bestehen und mehrere Kettfäden und/oder mehrere Schussfäden (S30, S32) aus dem zweiten Garn (16) bestehen und sich die jeweiligen Kettfäden und Schussfäden derart überkreuzen, dass
(i) ein aus dem ersten Garn bestehender Kettfaden einen oder mehrere Bindungspunkte jeweils mit aus dem zweiten Garn bestehenden Schussfäden bildet oder
(ii) ein aus dem ersten Garn bestehender Schussfaden einen oder mehrere Bindungspunkte jeweils mit aus dem zweiten Garn bestehenden Kettfäden bildet oder
(iii) ein aus dem zweiten Garn bestehender Kettfaden einen oder mehrere Bindungspunkte jeweils mit aus dem ersten Garn bestehenden Schussfäden bildet oder
(iv) ein aus dem zweiten Garn (16) bestehender Schussfaden (S30) einen oder mehrere Bindungspunkte (B(S30, K27), B(S30, K33)) jeweils mit aus dem ersten Garn (15) bestehenden Kettfäden (K26, K27, K28, K32, K33, K34) bildet.

12. Textilsubstrat (1, 30, 40) nach einem der Ansprüche 1-11, welches
als Gewebe oder als Gewirk oder Gestrick in Form eines Raschel oder Malimo ausgebildet ist.

13. Textilsubstrat (1, 30, 40) nach einem der Ansprüche 1-12, wobei
die jeweilige erste Faser und/oder die jeweilige zweite Faser und/oder die jeweilige dritte Faser und/oder die jeweilige Celluloseregenerat-Faser des zweiten Garns und/oder
das erste Garn als Ganzes und/oder das zweite Garn als Ganzes und/oder
das Textilsubstrat als Ganzes
mit einem flammhemmenden Mittel imprägniert ist.

14. Textilsubstrat (1, 30, 40) nach einem der Ansprüche 1-13, welches
hinsichtlich einer Durchdringung des Textilsubstrats mit Wasserdampf einen Wasserdampfdurchgangswiderstand mit einem Rₑₜ-Wert kleiner als 9 m²Pa/W aufweist.

15. Textilsubstrat (1, 30, 40) nach einem der Ansprüche 1-14, welches
einen Wärmedurchgangswiderstand aufweist, welcher kleiner als 24 10⁻³ m²K/W ist.

16. Textilsubstrat (1, 30, 40) nach einem der Ansprüche 1-15, welches
gefärbt ist und eine Reflektivität von Infrarot-Strahlung im Wellenlängenbereich von 800 nm bis 2000 nm im Durchschnitt von mindestens 50% aufweist.

17. Bezugsstoff zum Beziehen eines Sitzes (51) und/oder einer Rückenlehne (52) und/oder eines Seitenteils (53) und/oder einer Armlehne (54) einer Sitzeinrichtung (50),
bestehend aus einem Textilsubstrat (1) nach einem der Ansprüche 1-16, wobei die erste Oberfläche (2-1) die rechte Warenseite bildet.

18. Sitzeinrichtung (50), mit einem Sitz (51) und/oder einer Rückenlehne (52) und/oder einem Seitenteil (53) und/oder einer Armlehne (54), wobei
der Sitz (51) ein Textilsubstrat (1) nach einem der Ansprüche 1-16 umfasst und die erste Oberfläche (2-1) des Textilsubstrats (1) eine äussere Oberfläche des Sitzes (51) bildet und/oder
die Rückenlehne (52) ein Textilsubstrat (1) nach einem der Ansprüche 1-16 umfasst und die erste Oberfläche (2-1) des Textilsubstrats (1) eine äussere Oberfläche der Rückenlehne (52) bildet und/oder
das Seitenteil (53) ein Textilsubstrat (1) nach einem der Ansprüche 1-16 umfasst und die erste Oberfläche (2-1) des Textilsubstrats (1) eine äussere Oberfläche des Seitenteils (53) bildet und/oder
die Armlehne (54) ein Textilsubstrat (1) nach einem der Ansprüche 1-16 umfasst und die erste Oberfläche (2-1) des Textilsubstrats (1) eine äussere Oberfläche der Armlehne (54) bildet.
